# EUROPÄISCHE PATENTANMELDUNG

(11) **EP 3 173 738 A1**
(43) Veröffentlichungstag der Anmeldung: **31.05.2017**
(21) Anmeldenummer: 15197022.5
(22) Anmeldetag: 30.11.2015
(51) Int. Cl.: G01C 15/00, G01C 25/00

(54) **VERFAHREN ZUM ÜBERPRÜFEN EINES ROTATIONSLASERS AUF KONUSFEHLER**

(71) Anmelder: HILTI Aktiengesellschaft, 9494 Schaan (LI)
(72) Erfinder: Lukic, Sasha, 9470 Buchs (CH)
(74) Vertreter: Hilti Aktiengesellschaft Corporate Intellectual Property

(57) **Zusammenfassung**

Verfahren zum Überprüfen eines Rotationslasers (11) auf Konusfehler mit Hilfe eines Laserempfängers (12), wobei der Rotationslaser (11) einen, in einer Horizontalebene um eine Rotationsachse (21) rotierbaren Laserstrahl (22) aussendet und die Horizontalebene von einer ersten und zweiten Horizontalachse aufgespannt wird. Der Rotationslaser (11) wird in Horizontallage in einer ersten und zweiten Ortsposition zwischen einer ersten Messfläche (91) und einer zweiten Messfläche (92) aufgestellt, wobei der Rotationslaser (11) in der ersten Ortsposition eine erste Messentfernung (D₁) und in der zweiten Ortsposition eine zweite Messentfernung (D₂) zur zweiten Messfläche (92) aufweist.

## Beschreibung

### Technisches Gebiet

Die vorliegende Erfindung betrifft ein Verfahren zum Überprüfen eines Rotationslasers auf Konusfehler gemäß dem Oberbegriff des Anspruchs 1.

### Stand der Technik

Rotationslaser werden im Innen- und Außenbereich für Nivellier- und Markierungsarbeiten eingesetzt, wie die Anzeige von horizontal, vertikal oder schräg verlaufenden Lasermarkierungen auf einer Zielfläche oder die Ermittlung und Überprüfung von waagerechten Höhenverläufen, senkrechten Linien, Fluchtlinien und Lotpunkten. Rotationslaser können in verschiedenen Gerätelagen, die als Horizontallage und Vertikallage ausgebildet sind, angeordnet werden. Dabei werden horizontal einsetzbare Rotationslaser, die ausschließlich in Horizontallage eingesetzt werden, und horizontal und vertikal einsetzbare Rotationslaser, die in Horizontallage und Vertikallage eingesetzt werden, unterschieden. Horizontal einsetzbare Rotationslaser weisen als Geräteachsen eine erste Horizontalachse und eine zweite Horizontalachse auf, die senkrecht zueinander verlaufen und eine Horizontalebene aufspannen. Horizontal und vertikal einsetzbare Rotationslaser weisen als Geräteachse neben der ersten und zweiten Horizontalachse eine Vertikalachse auf, die senkrecht zur Horizontalebene der ersten und zweiten Horizontalachse verläuft.

Um die Genauigkeit eines Rotationslasers im Betrieb zu gewährleisten, muss die Genauigkeit regelmäßig überprüft und bei Überschreiten einer Maximaldifferenz, die der Gerätehersteller definiert hat, eine Kalibrierung des Rotationslasers durchgeführt werden. Dabei wird die Genauigkeit des Rotationslasers für jede Geräteachse separat überprüft. Bekannt sind Verfahren zum Überprüfen und/oder Kalibrieren einer Horizontalachse und Verfahren zum Überprüfen und/oder Kalibrieren einer Vertikalachse. Bei horizontal einsetzbaren Rotationslasern werden nacheinander die erste und zweite Horizontalachse überprüft, wobei die Reihenfolge beliebig ist. Bei horizontal und vertikal einsetzbaren Rotationslasern erfolgt im Anschluss an die Überprüfung der ersten und zweiten Horizontalachse eine Überprüfung der Vertikalachse.

Die Ausrichtung der Geräteachsen in einen definierten Zustand erfolgt mittels einer Nivelliereinrichtung des Rotationslasers. Der definierte Zustand des Rotationslasers in Horizontallage wird als horizontaler Zustand und in Vertikallage als vertikaler Zustand bezeichnet. Die Nivelliereinrichtung umfasst eine erste Nivelliereinheit, die die erste Horizontalachse in einen ersten definierten Zustand ausrichtet, eine zweite Nivelliereinheit, die die zweite Horizontalachse in einen zweiten definierten Zustand ausrichtet, und bei einem vertikal einsetzbaren Rotationslaser eine dritte Nivelliereinheit, die die Vertikalachse in einen dritten definierten Zustand ausrichtet. Die Nivelliereinheiten umfassen jeweils einen Neigungssensor, der die Neigung der Geräteachse misst, und ein Verstellelement, mit dem die Neigung der Geräteachse verstellbar ist. Im Idealfall sind die Neigungssensoren parallel zu den zugeordneten Geräteachsen ausgerichtet. Ist ein Neigungssensor nicht parallel zur zugeordneten Geräteachse ausgerichtet, weist die Geräteachse einen Neigungsfehler auf.

Neben Abweichungen zwischen den Neigungssensoren und Geräteachsen können weitere Fehler auftreten, die die Genauigkeit eines Rotationslasers verschlechtern. Dazu gehören Konusfehler des Rotationslasers, die durch eine Neigung der Umlenkoptik zur Rotationsachse entstehen. Bei der Mehrzahl von Rotationslasern im Stand der Technik ist kein Verfahren zum Überprüfen eines Rotationslasers auf Konusfehler durch den Bediener vorgesehen. Die Überprüfung auf Konusfehler erfolgt bei den meisten Rotationslasern beim Gerätehersteller im Rahmen eines Kalibrierservice. Zu den Rotationslasern, bei denen eine Überprüfung auf Konusfehler durch den Bediener vorgesehen ist, gehören die Rotationslaser TRIAX UL-300 von Sokkia und die Rotationslaser RL-100 1 S von Topcon. Dabei werden die Verfahren zum Überprüfen auf Konusfehler im Anschluss an die Überprüfung und ggfs. Kalibrierung der Horizontalachsen durchgeführt. Die Überprüfung auf Konusfehler erfolgt in Horizontallage der Rotationslaser mittels eines rotierenden Laserstrahls zwischen einer ersten Messfläche und einer parallelen zweiten Messfläche. Die Rotationslaser werden in einer ersten Ortsposition und einer zweiten Ortsposition mit verschiedenen Messentfernungen zur zweiten Messfläche aufgestellt.

Der Ablauf der bekannten Verfahren zum Überprüfen der Rotationslaser TRIAX UL-300 und RL-100 1 S auf Konusfehler ist identisch, die Verfahren unterscheiden sich im Abstand zwischen der ersten und zweiten Messfläche sowie in den Messentfernungen, die die Rotationslaser in der ersten und zweiten Ortsposition zur zweiten Messfläche aufweisen. Die erste und zweite Messfläche weisen beim Rotationslaser TRIAX UL-300 einen Abstand von ca. 30 m und beim Rotationslaser RL-100 1 S einen Abstand von ca. 50 m auf. Der Rotationslaser TRIAX UL-300 weist in der ersten Ortsposition eine erste Messentfernung von ca. 29 m und in der zweiten Ortsposition eine zweite Messentfernung von ca. 1 m zur zweiten Messfläche auf. Der Rotationslaser RL-100 1 S weist in der ersten Ortsposition eine erste Messentfernung von ca. 25 m und in der zweiten Ortsposition eine zweite Messentfernung von ca. 1 bis 2 m zur zweiten Messfläche auf.

Zum Überprüfen eines Rotationslasers auf Konusfehler wird der Rotationslaser in Horizontallage in der ersten Ortsposition mit einer ersten Messentfernung zur zweiten Messfläche aufgestellt. Die Horizontalachsen des Rotationslasers werden in der ersten Ortsposition in einen horizontalen Zustand ausgerichtet, wobei der horizontale Zustand der ersten Horizontalachse durch eine erste Nulllage und der horizontale Zustand der zweiten Horizontalachse durch eine zweite Nulllage festgelegt ist. Die Auftreffposition des rotierenden Laserstrahls wird als erster Kontrollpunkt auf der ersten Messfläche markiert. Der Rotationslaser wird in der ersten Ortsposition um 180° um die Rotationsachse des Rotationslasers gedreht und die Auftreffposition des rotierenden Laserstrahls auf der zweiten Messfläche wird als zweiter Kontrollpunkt markiert. Anschließend wird der Rotationslaser in Horizontallage in der zweiten Ortsposition mit einer zweiten Messentfernung zur zweiten Messfläche aufgestellt, wobei die Ausrichtung der Horizontalachsen gegenüber der ersten Ortsposition unverändert ist. Die Horizontalachsen des Rotationslasers werden in der zweiten Ortsposition in den horizontalen Zustand ausgerichtet. Die Auftreffposition des rotierenden Laserstrahls auf der zweiten Messfläche wird als dritter Kontrollpunkt markiert. Der Rotationslaser wird in der zweiten Ortsposition um 180° um die Rotationsachse des Rotationslasers gedreht und die Auftreffposition des rotierenden Laserstrahls auf der ersten Messfläche wird als vierter Kontrollpunkt markiert. Der Abstand zwischen dem ersten und vierten Kontrollpunkt auf der ersten Messfläche wird als erste Differenz bestimmt und der Abstand zwischen dem zweiten und dritten Kontrollpunkt auf der zweiten Messfläche wird als zweite Differenz bestimmt. Die erste und zweite Differenz werden mit einer vom Gerätehersteller festgelegten Maximaldifferenz verglichen. Wenn die erste und/oder zweite Differenz die Maximaldifferenz überschreitet, erfüllt der Rotationslaser die Genauigkeitsanforderungen nicht und sollte beim Geräteherstellerjustiert werden. Die Maximaldifferenz beträgt 6 mm für den Rotationslaser TRIAX UL-300 von Sokkia und 10 mm für den Rotationslaser RL-100 1S von Topcon.

Die bekannten Verfahren zum Überprüfen eines Rotationslasers auf Konusfehler weisen den Nachteil auf, dass die Abstände zwischen der ersten Messfläche und zweiten Messfläche fest vorgegeben sind. Der für die Rotationslaser TRIAX UL-300 von Sokkia festgelegte Abstand von 30 m und vor allem der für die Rotationslaser RL-100 1 S von Topcon festgelegte Abstand von 50 m zwischen der ersten und zweiten Messfläche ist bei Messaufgaben im Innenbereich häufig nicht vorhanden. Ausserdem werden die Auftreffpositionen des Laserstrahls vom Bediener manuell auf die Messflächen übertragen werden, was für eine Automatisierung des Verfahrens ungeeignet ist. Nachteilig ist außerdem, dass die Genauigkeit des Verfahrens von der Sorgfalt des Bedieners beim Bestimmen des Mittelpunktes des Laserstrahls, beim Übertragen des Mittelpunktes auf die Messfläche und beim Bestimmen des Abstandes zwischen den Kontrollpunkten abhängig ist.

### Darstellung der Erfindung

Die Aufgabe der vorliegenden Erfindung besteht in der Entwicklung eines Verfahrens zum Überprüfen eines Rotationslasers auf Konusfehler, das an die Umgebungsbedingungen der Messumgebung angepasst werden kann. Außerdem soll das Verfahren für eine weitgehend automatische Ausführung geeignet sein.

Diese Aufgabe wird bei dem eingangs genannten Verfahren zum Überprüfen eines Rotationslasers auf Konusfehler erfindungsgemäß durch die Merkmale des unabhängigen Anspruchs 1 gelöst. Vorteilhafte Weiterbildungen sind in den abhängigen Ansprüchen angegeben.

Das Verfahren zum Überprüfen eines Rotationslasers auf Konusfehler weist erfindungsgemäß die Schritte auf:
▪ der Rotationslaser wird in einer ersten Ortsposition zwischen einer ersten Messfläche und einer zweiten Messfläche aufgestellt, wobei der Rotationslaser in der ersten Ortsposition eine erste Messentfernung D₁ zur zweiten Messfläche aufweist und in einer Messrichtung auf die zweite Messfläche ausgerichtet ist,
▪ die Horizontalachsen des Rotationslasers werden in einen horizontalen Zustand ausgerichtet, wobei der horizontale Zustand der Horizontalachsen durch eine erste Nulllage für die erste Horizontalachse und eine zweite Nulllage für die zweite Horizontalachse festgelegt ist,
▪ die Auftreffposition des Laserstrahls auf der ersten Messfläche wird als erster Kontrollpunkt bestimmt,
▪ die Auftreffposition des Laserstrahls auf der zweiten Messfläche wird von einem Detektionsfeld eines Laserempfängers als zweiter Kontrollpunkt bestimmt und der Abstand des zweiten Kontrollpunktes zu einer Nullposition des Detektionsfeldes als erster Höhenversatz H₁ gespeichert,
▪ der Rotationslaser wird in einer zweiten Ortsposition zwischen der ersten Messfläche und zweiten Messfläche aufgestellt, wobei der Rotationslaser in der zweiten Ortsposition eine zweite Messentfernung D₂ zur zweiten Messfläche aufweist und in der Messrichtung auf die zweite Messfläche ausgerichtet ist,
▪ der Rotationslaser wird in einer Höhe angeordnet, in der die Auftreffposition des Laserstrahls auf der ersten Messfläche mit dem ersten Kontrollpunkt übereinstimmt,
▪ die Auftreffposition des Laserstrahls auf der zweiten Messfläche wird vom Detektionsfeld des Laserempfängers als dritter Kontrollpunkt bestimmt und der Abstand des dritten Kontrollpunktes zur Nullposition des Detektionsfeldes als zweiter Höhenversatz H₂ gespeichert,
▪ der Abstand zwischen dem zweiten Kontrollpunkt und dritten Kontrollpunkt wird als Differenz Δ aus dem ersten und zweiten Höhenversatz berechnet,
▪ ein Konusfehler δ wird aus der ersten Messentfernung D₁, der zweiten Messentfernung D₂ und der Differenz Δ berechnet und
▪ der Konusfehler δ wird mit einem Maximalfehler δₘₐₓ verglichen.

Beim erfindungsgemäßen Verfahren zum Überprüfen eines Rotationslasers auf Konusfehler werden die Messentfernungen D₁, D₂ zwischen dem Rotationslaser und dem Laserempfänger in der ersten und zweiten Ortsposition gemessen und sind nicht auf vorgegebene Messentfernungen festgelegt. Dies hat den Vorteil, dass die erste und zweite Messentfernung D₁, D₂ an die Umgebungsbedingungen der Messumgebung angepasst werden können. Die Auftreffpositionen des Laserstrahls auf der zweiten Messfläche werden beim erfindungsgemäßen Verfahren mit einem Laserempfänger bestimmt und als Höhenversatz H₁, H₂ zur Nullposition des Detektionsfeldes gespeichert. Durch die Verwendung eines Laserempfängers mit Messfunktion wird die Messgenauigkeit bei der Ausführung des Verfahrens erhöht. Der Laserempfänger bestimmt die Auftreffposition des Laserstrahls auf dem Detektionsfeld nach einer festen Routine. Dies hat den Vorteil, dass die Genauigkeit des Verfahrens unabhängig von der Sorgfalt des Bedieners ist und sich für eine automatisierte Ausführung des Verfahrens eignet. Wenn der Rotationslaser auf einem Stativ mit motorischer Höheneinstellung und Drehplattform angeordnet wird, kann das erfindungsgemäße Verfahren in der ersten und zweiten Ortsposition automatisch ausgeführt werden; der Bediener muss lediglich den Rotationslaser aus der ersten Ortsposition in die zweite Ortsposition verstellen.

Der Rotationslaser wird in der ersten Ortsposition in einer beliebigen Messrichtung auf die zweite Messfläche ausgerichtet. Dabei kann die erste Horizontalachse, die zweite Horizontalachse oder eine beliebige Achse in der Horizontalebene auf die zweite Messfläche ausgerichtet sein. Wichtig ist, dass die Ausrichtung des Rotationslasers in der zweiten Ortsposition gegenüber der ersten Ortsposition unverändert ist und die festgelegte Messrichtung auf die zweite Messfläche ausgerichtet ist. Der erste Kontrollpunkt auf der ersten Messfläche wird dazu verwendet, die Höheneinstellung des Rotationslasers in der zweiten Ortsposition vorzunehmen. Der Konusfehler δ wird aus der ersten Messentfernung D₁, der zweiten Messentfernung D₂ und der Differenz Δ zwischen dem ersten und zweiten Höhenversatz H₁, H₂ berechnet. Der Konusfehler δ kann gemäß der Formel tan(δ) = ½(H1 - H₂)/(D₁ - D₂) berechnet werden. Wenn der Konusfehler δ grösser als der Maximalfehler δₘₐₓ ist, ist eine Justierung des Rotationslasers erforderlich.

In einer bevorzugten Ausführung wird die Auftreffposition des Laserstrahls auf der ersten Messfläche in der ersten Ortsposition von einem weiteren Laserempfänger bestimmt. Die Verwendung eines weiteren Laserempfängers hat den Vorteil, dass die Auftreffposition des Laserstrahls auf der ersten Messfläche mit einer hohen Messgenauigkeit bestimmt werden kann. Außerdem können die Position der ersten Messfläche und der Abstand zur zweiten Messfläche an die jeweilige Messumgebung angepasst werden. Wenn der Rotationslaser und der Laserempfänger über eine Auto-Alignment-Funktion verfügen, können die Verfahrensschritte des erfindungsgemäßen Verfahrens in der ersten und zweiten Ortsposition vollautomatisiert durchgeführt werden. Der Bediener muss lediglich den Rotationslaser aus der ersten Ortsposition in die zweite Ortsposition verstellen.

Besonders bevorzugt erfolgt die Höheneinstellung des Rotationslasers in der zweiten Ortsposition geregelt. Da die erste und zweite Messentfernung D₁, D₂ beliebig sind, muss die Höhe des Rotationslasers so eingestellt werden, dass Abweichungen auf Konusfehler zurückzuführen sind. Dazu wird der erste Kontrollpunkt des Laserstrahls auf der ersten Messfläche verwendet. Der Rotationslaser wird in der zweiten Ortsposition so in der Höhe eingestellt, dass die Auftreffposition des Laserstrahls auf der ersten Messfläche mit dem ersten Kontrollpunkt übereinstimmt. Wenn die Höheneinstellung geregelt erfolgt, kann das Verfahren automatisiert durchgeführt werden. Der erste Kontrollpunkt wird von dem weiteren Laserempfänger gespeichert und mit Hilfe einer Auto-Alignment-Funktion zur Höheneinstellung des Rotationslasers verwendet. Die Auto-Alignment-Funktion ist in dem europäischen Patent EP 1 203 930 B1 beschrieben.

Bevorzugt werden die erste Messentfernung in der ersten Ortsposition und/oder die zweite Messentfernung in der zweiten Ortsposition mittels des Rotationslasers und des Laserempfängers bestimmt. Das erfindungsgemäße Verfahren hat den Vorteil, dass die Umgebungsbedingungen der Messumgebung beim Überprüfen des Rotationslasers auf Konusfehler berücksichtigt werden können. Die erste und zweite Messentfernung zwischen dem Rotationslaser und dem Laserempfänger in der ersten und zweiten Ortsposition können so gewählt werden, wie es die Messumgebung zulässt.

Besonders bevorzugt werden die erste und/oder zweite Messentfernung zwischen dem Rotationslaser und dem Laserempfänger als erste Distanz mittels eines ersten Messverfahrens, als zweite Distanz mittels eines zweiten Messverfahrens oder als gemittelte Distanz aus der ersten und zweiten Distanz bestimmt. Wenn die erste und/oder zweite Messentfernung zwischen dem Rotationslaser und dem Laserempfänger mittels verschiedener Messverfahren bestimmt werden können, kann das Verfahren zum Überprüfen des Rotationslasers auf Konusfehler an die Umgebungsbedingungen der Messumgebung und die Funktionen der Messgeräte (Rotationslaser und Laserempfänger) angepasst werden.

In einer ersten bevorzugten Ausführung wird die erste und/oder zweite Messentfernung zwischen dem Rotationslaser und dem Laserempfänger als erste Distanz mittels des ersten Messverfahrens bestimmt. Beim ersten Messverfahren wird der Laserstrahl um einen bekannten Neigungswinkel geneigt und der Abstand des geneigten Laserstrahls zur Nullposition des Detektionsfeldes wird gespeichert. Das erste Messverfahren ist für Laserempfänger mit einer Messfunktion geeignet, die den Abstand eines Laserstrahls zu einer Nullposition messen können. Die Neigung des Laserstrahls um den Neigungswinkel kann mittels der Nivelliereinrichtung des Rotationslasers durchgeführt werden. Die Nivelliereinrichtung umfasst eine erste Nivelliereinheit, die die erste Horizontalachse in einen ersten definierten Zustand ausrichtet, eine zweite Nivelliereinheit, die die zweite Horizontalachse in einen zweiten definierten Zustand ausrichtet. Der Rotationslaser kann in einer beliebigen Messrichtung auf die zweite Messfläche ausgerichtet sein, wobei die erste Horizontalachse, die zweite Horizontalachse oder eine beliebige Achse in der Horizontalebene als Messrichtung definiert sein kann. Wenn die erste oder zweite Horizontalachse als Messrichtung verwendet wird, ist der Rotationslaser für die Distanzmessung in einer geeigneten Winkelposition angeordnet. Dabei erfolgt die Neigung des Laserstrahls mittels der ersten Nivelliereinheit, wenn die erste Horizontalachse als Messrichtung verwendet wird, und mittels der zweiten Nivelliereinheit, wenn die zweite Horizontalachse als Messrichtung verwendet wird.

In einer ersten Variante des ersten Messverfahrens wird der Rotationslaser horizontal ausgerichtet, der horizontal ausgerichtete Laserstrahl wird auf die Nullposition des Detektionsfeldes eingestellt, der Laserstrahl wird in Richtung des Laserempfängers um einen Neigungswinkel α geneigt, die Auftreffposition des geneigten Laserstrahls auf dem Detektionsfeld des Laserempfängers wird als erster Messpunkt bestimmt, der Abstand des ersten Messpunktes zur Nullposition des Detektionsfeldes wird als erste Höhe h₁ = h(α) gespeichert und die erste Distanz d₁ wird aus dem Neigungswinkel α und einer Höhendifferenz Δh zwischen der ersten Höhe h₁ und der Nullposition des Detektionsfeldes berechnet. Wenn die Längsrichtung des Laserempfängers parallel zur Lotrichtung ausgerichtet ist, kann die erste Distanz d₁ gemäß der Formel tan(α) = Δh/d₁ berechnet werden. Für kleine Neigungswinkel α gilt näherungsweise tan(α) ≈ sin(a). Die erste Variante des ersten Messverfahrens ist besonders für Rotationslaser und Laserempfänger mit Auto-Alignment-Funktion geeignet, bei denen die Höheneinstellung des Laserstrahls auf die Nullposition des Detektionsfeldes des Laserempfängers automatisch durchgeführt werden kann.

In einer zweiten Variante des ersten Messverfahrens wird der Rotationslaser horizontal ausgerichtet, die Auftreffposition des horizontal ausgerichteten Laserstrahls auf dem Detektionsfeld des Laserempfängers wird als Referenzpunkt bestimmt, der Abstand des Referenzpunktes zur Nullposition des Detektionsfeldes wird als Referenzhöhe h₀= h(0°) gespeichert, der Laserstrahl wird um einen Neigungswinkel α geneigt, die Auftreffposition des geneigten Laserstrahls auf dem Detektionsfeld wird als erster Messpunkt bestimmt, der Abstand des ersten Messpunktes zur Nullposition des Detektionsfeldes wird als erste Höhe h₁ = h(α) gespeichert und die erste Distanz d₁ wird aus dem Neigungswinkel α und einer Höhendifferenz Δh zwischen der ersten Höhe h₁ und der Referenzhöhe h₀ berechnet. Wenn die Längsrichtung des Laserempfängers parallel zur Lotrichtung ausgerichtet ist, kann die erste Distanz d₁ gemäß der Formel tan(α) = (h₁ - h₀)/d₁ = Δh/d₁ berechnet werden. Für kleine Neigungswinkel α gilt näherungsweise tan(α) ≈ sin(a). Die zweite Variante des ersten Messverfahrens ist für Rotationslaser und Laserempfänger ohne Auto-Alignment-Funktion geeignet. Der Bediener muss lediglich sicherstellen, dass der um den Neigungswinkel α geneigte Laserstrahl vom Detektionsfeld des Laserempfängers erfasst wird. Bei einem Rotationslaser und Laserempfänger mit Auto-Alignment-Funktion wird der Laserstrahl automatisiert in den Bereich des Detektionsfeldes verfahren.

In einer dritten Variante des ersten Messverfahrens wird der Rotationslaser horizontal ausgerichtet, der horizontal ausgerichtete Laserstrahl wird in einer Neigungsrichtung um einen Neigungswinkel α geneigt, die Auftreffposition des geneigten Laserstrahls auf dem Detektionsfeld des Laserempfängers wird als erster Messpunkt bestimmt, der Abstand des ersten Messpunktes zur Nullposition des Detektionsfeldes wird als erste Höhe h₁ = h(α) gespeichert, der Laserstrahl wird in einer entgegen gerichteten Neigungsrichtung um einen negativen Neigungswinkel -α geneigt, die Auftreffposition des geneigten Laserstrahls auf dem Detektionsfeld wird als zweiter Messpunkt bestimmt, der Abstand des zweiten Messpunktes zur Nullposition des Detektionsfeldes wird als zweite Höhe h₂ = h(-α) gespeichert und die erste Distanz d₁ wird aus dem Neigungswinkel α und einer Höhendifferenz Δh zwischen der ersten Höhe h₁ und zweiten Höhe h₂ berechnet. Wenn die Längsrichtung des Laserempfängers parallel zur Lotrichtung ausgerichtet ist, kann die erste Distanz d₁ gemäß der Formel tan(2α) = (h(α) - h(-α))/d₁ = Δh/d₁ berechnet werden. Für kleine Neigungswinkel α gilt näherungsweise tan(2α) ≈ sin(2α). Die dritte Variante des ersten Messverfahrens ist für Rotationslaser und Laserempfänger mit und ohne Auto-Alignment-Funktion geeignet. Wenn der horizontal ausgerichtete Laserstrahl zunächst auf die Nullposition des Detektionsfeldes oder zumindest in die Nähe der Nullposition ausgerichtet wird, kann die gesamte Detektionshöhe des Detektionsfeldes genutzt werden. Bei einem Gerätesystem mit Auto-Alignment-Funktion kann die Höheneinstellung auf die Nullposition automatisiert durchgeführt werden.

In einer zweiten bevorzugten Ausführung wird die erste und/oder zweite Messentfernung zwischen dem Rotationslaser und dem Laserempfänger als zweite Distanz mittels des zweiten Messverfahrens bestimmt. Beim zweiten Messverfahren wird der Rotationslaser horizontal ausgerichtet, der horizontal ausgerichtete Laserstrahl wird mit einer Rotationsgeschwindigkeit v_{R} um die Rotationsachse rotiert, die Signallänge tₛ des rotierenden Laserstrahls auf dem Detektionsfeld des Laserempfängers wird bestimmt und die zweite Distanz d₂ wird aus der Rotationsgeschwindigkeit v_{R}, der Signallänge tₛ und der Detektionsbreite B_{D} des Detektionsfeldes berechnet. Wenn die Längsrichtung des Laserempfängers parallel zur Lotrichtung ausgerichtet ist, kann die zweite Distanz d₂ gemäß der Formel tₛ/t_{full} = B_{D}/(2πd₂) mit t_{full} = 60/v_{R} berechnet werden. Die Rotationsgeschwindigkeit v_{R} wird in Umdrehungen pro Minute angegeben und die für eine Umdrehung erforderliche Zeit t_{full} beträgt 60/v_{R}. Das zweite Messverfahren ist für Rotationslaser und Laserempfänger ohne Auto-Alignment-Funktion geeignet. Der Laserempfänger muss die Signallänge tₛ des rotierenden Laserstrahls auf dem Detektionsfeld messen können.

In einer dritten bevorzugten Ausführung wird die erste und/oder zweite Messentfernung zwischen dem Rotationslaser und dem Laserempfänger als gemittelte Distanz aus der ersten und zweiten Distanz bestimmt. Durch die Mittelung aus der ersten und zweiten Distanz kann die Genauigkeit, mit der die Messentfernung zwischen dem Rotationslaser und dem Laserempfänger bestimmt werden kann, erhöht werden. Die erste Distanz, die mittels des ersten Messverfahrens bestimmt wird, ist grösser oder gleich der tatsächlichen Messentfernung. Wenn die Längsrichtung des Laserempfängers nicht parallel zur Lotrichtung ausgerichtet ist, sondern gegenüber der Lotrichtung geneigt ist, ist der vertikale Abstand in Lotrichtung kleiner als der Abstand, den das Detektionsfeld des Laserempfängers gemessen hat. Die zweite Distanz, die mittels des zweiten Messverfahrens bestimmt wird, ist kleiner oder gleich der tatsächlichen Messentfernung. Wenn die Längsrichtung des Laserempfängers nicht parallel zur Lotrichtung ausgerichtet ist, sondern gegenüber der Lotrichtung geneigt ist, ist der horizontale Abstand senkrecht zur Lotrichtung, den der rotierende Laserstrahl auf dem Detektionsfeld überstreift, grösser als die Detektionsbreite B_{D} des Detektionsfeldes.

In einer bevorzugten Weiterentwicklung des Verfahrens wird eine Neigung des Laserempfängers relativ zu einer Lotrichtung als erster Vertikalwinkel φ₁ in einer ersten Vertikalebene und/oder als zweiter Vertikalwinkel φ₂ in einer zweiten Vertikalebene ermittelt, wobei die erste Vertikalebene von der Lotrichtung und einem Normalenvektor des Detektionsfeldes des Laserempfängers und die zweite Vertikalebene von einer Längsrichtung und einer Querrichtung des Detektionsfeldes aufgespannt wird. Der erste Vertikalwinkel φ₁ wird zwischen dem Normalenvektor des Detektionsfeldes und der Lotrichtung gemessen, wobei der erste Vertikalwinkel φ₁ die Abweichung von 90° zwischen dem Normalenvektor und der Lotrichtung darstellt, und der zweite Vertikalwinkel φ₂ wird zwischen der Lotrichtung und der Längsrichtung des Detektionsfeldes gemessen. Bei der Ausführung des erfindungsgemäßen Verfahrens ist der Laserempfänger in Längsanordnung ausgerichtet, wobei die Längsrichtung des Detektionsfeldes parallel zur Lotrichtung und die Querrichtung des Detektionsfeldes senkrecht zur Lotrichtung verlaufen sollten. Durch eine Neigung des Laserempfängers relativ zur Lotrichtung weichen die horizontalen und vertikalen Abstände von den Abständen, die das Detektionsfeld des Laserempfängers gemessen hat, ab. Wenn die Neigung des Laserempfängers bekannt ist, können die Größen entsprechend korrigiert werden. Der Laserempfänger kann relativ zur Lotrichtung um den ersten Vertikalwinkel, den zweiten Vertikalwinkel oder den ersten und zweiten Vertikalwinkel geneigt sein. Die Neigung des Laserempfängers kann mittels eines 2-Achsen-Beschleunigungssensors oder mittels zwei 1-Achs-Beschleunigungssensoren gemessen werden.

Besonders bevorzugt wird bei der Auswertung mit dem Laserempfänger für den ersten Vertikalwinkel φ₁ und/oder den zweiten Vertikalwinkel φ₂ ein winkelabhängiger Korrekturfaktor cos(φ₁), cos(φ₂), 1/cos(φ₂) multipliziert. Durch die Multiplikation mit einem winkelabhängigen Korrekturfaktor oder mit mehreren winkelabhängigen Korrekturfaktoren kann die Neigung des Laserempfängers um den ersten Vertikalwinkel φ₁ und/oder den zweiten Vertikalwinkel φ₂ kompensiert werden. In den Formeln, die die Messfunktion des Laserempfängers nutzen und Abstände auf dem Detektionsfeld in Längsrichtung messen, werden die Abstände mit einem Korrekturfaktor cos(φ₁) für den ersten Vertikalwinkel φ₁ und einem Korrekturfaktor cos(φ₂) für den zweiten Vertikalwinkel φ₂ multipliziert. Der Korrekturfaktor cos(φ₁) · cos(φ₂) ist bei der Distanzmessung der Messentfernung mittels des ersten Messverfahrens, bei der Bestimmung der Differenz zwischen dem zweiten und dritten Kontrollpunkt und der Berechnung des Konusfehlers im Rahmen des erfindungsgemäßen Verfahrens zu berücksichtigen.

Bei der Distanzmessung der ersten oder zweiten Messentfernung als zweite Distanz mittels des zweiten Messverfahrens wird nicht die übliche Messfunktion des Laserempfängers in Längsrichtung genutzt, sondern die Detektionsbreite in Querrichtung. Durch die Neigung des Laserempfängers in der zweiten Vertikalebene um den zweiten Vertikalwinkel φ₂ ist der horizontale Abstand, den der rotierende Laserstrahl auf dem Detektionsfeld überstreift, grösser als die Detektionsbreite B_{D} des Detektionsfeldes. Die Signallänge des rotierenden Laserstrahls entspricht dem horizontalen Abstand auf dem Detektionsfeld. Für den horizontalen Abstand gilt der Zusammenhang B_{D}/cos(φ₂). Eine Neigung des Laserempfängers um den ersten Vertikalwinkel φ₁ verändert den horizontalen Abstand nicht. Der winkelabhängige Korrekturfaktor 1/cos(φ₂) wird bei der der Distanzmessung mittels des zweiten Messverfahrens berücksichtigt.

In einer bevorzugten Weiterentwicklung des Verfahrens werden für die Ausrichtung der ersten und zweiten Horizontalachse in den horizontalen Zustand mehrere erste und zweite Nulllagen in Abhängigkeit von einer Temperatur oder einer von der Temperatur abhängigen Messgröße aufgenommen und in einer ersten und zweiten Kennlinie gespeichert. Dabei umfasst der Begriff "Kennlinie" sowohl eine kontinuierliche Kennlinie als auch eine Tabelle mit diskreten Wertepaaren von Nulllage und Temperatur oder von Nulllage und temperaturabhängiger Messgröße. Die erste Kennlinie stellt für die erste Horizontalachse einen Zusammenhang zwischen der Temperatur bzw. der temperaturabhängigen Messgröße und der ersten Nulllage des ersten Neigungssensors her und die zweite Kennlinie stellt für die zweite Horizontalachse einen Zusammenhang zwischen der Temperatur bzw. der temperaturabhängigen Messgröße und der zweiten Nulllage des zweiten Neigungssensors her. Als Nulllage ist der Neigungswinkel definiert, der dem definierten Zustand der Horizontalachse entspricht. Aus der Kennlinie kann für jede Temperatur aus dem zugelassenen Betriebstemperaturbereich des Rotationslasers eine Nulllage abgelesen werden.

Bevorzugt wird die Temperatur oder die von der Temperatur abhängige Messgröße des Rotationslasers gemessen, die zur Temperatur oder Messgröße zugehörige Nulllage wird aus der Kennlinie ermittelt und die Horizontalachse wird in den durch die Nulllagen definierten horizontalen Zustand ausgerichtet. Durch die Temperaturmessung kann die Genauigkeit des Rotationslasers erhöht werden, da der Einfluss der Temperatur auf die Genauigkeit des Rotationslasers reduziert wird. Das erfindungsgemäße Verfahren zum Überprüfen eines Rotationslasers auf Konusfehler erfolgt im horizontalen Zustand der ersten und zweiten Horizontalachse. Bei der Überprüfung wird angenommen, dass Abweichungen auf Konusfehler zurückzuführen sind. Je geringer Neigungsfehler der ersten und zweiten Horizontalachse sind, umso geringer ist ihr Einfluss bei der Bestimmung des Konusfehlers.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine Vorrichtung mit einem Rotationslaser in Horizontallage und einem Laserempfänger in Längsanordnung;
- FIGN. 2A-C: den Rotationslaser der FIG. 1 in einer dreidimensionalen Darstellung (FIG. 2A) und die wesentlichen Komponenten des Rotationslasers in einer schematischen Darstellung in einer Vertikalebene (FIG. 2B) und einer Horizontalebene (FIG. 2C);
- FIGN. 3A, B: den Laserempfänger der FIG. 1 in einer dreidimensionalen Darstellung (FIG. 3A) und die wesentlichen Komponenten des Laserempfängers und des Rotationslasers in einer schematischen Darstellung (FIG. 3B);
- FIGN. 4A-C: den Rotationslaser und den Laserempfänger der FIG. 1 bei der Ausführung des erfindungsgemäßen Verfahrens zum Überprüfen eines Rotationslasers auf Konusfehler;
- FIGN. 5A-C: drei Varianten eines ersten Messverfahrens zum Messen einer Messentfernung zwischen dem Rotationslaser und dem Laserempfänger mittels eines geneigten Laserstrahls;
- FIGN. 6A, B: den Laserempfänger, der zu einer Lotrichtung um einen ersten Vertikalwinkel (FIG. 6A) und einen zweiten Vertikalwinkel (FIG. 6B) geneigt ist, in einer schematischen Darstellung; und
- FIGN. 7A-C: den Aufbau eines optischen Neigungssensors mit einer Gasblase (FIG. 7A), eine Kennlinie, die eine Nulllage des Neigungssensors abhängig von einer Temperatur darstellt (FIG. 7B), und eine weitere Kennlinie, die die Temperatur abhängig von einer Blasenlänge der Gasblase darstellt (FIG. 7C).

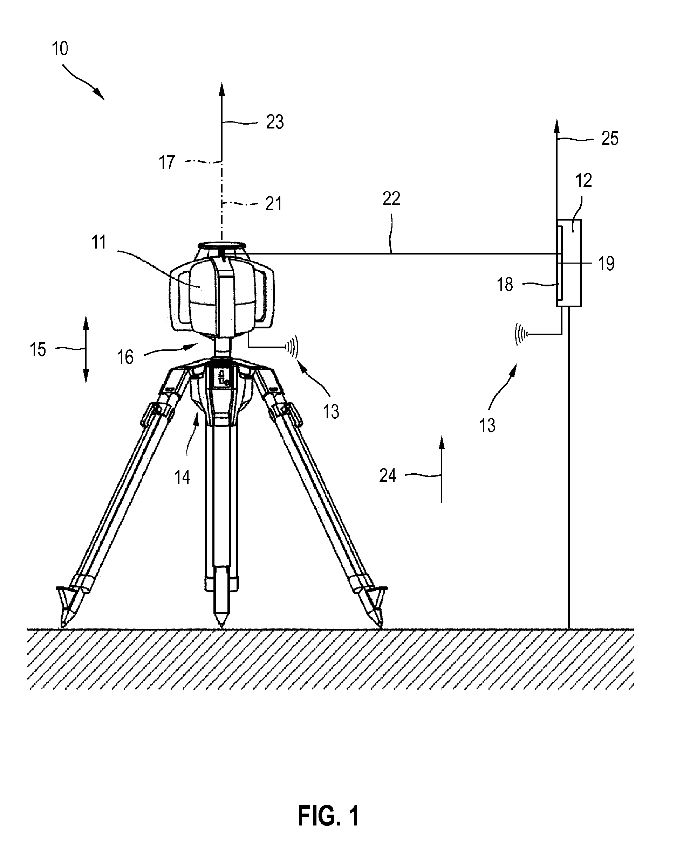

**FIG. 1** zeigt eine Vorrichtung **10** mit einem Rotationslaser **11** und einem Laserempfänger **12,** die über eine drahtlose Kommunikationsverbindung **13** verbindbar sind. Der Rotationslaser 11 ist in Horizontallage angeordnet, die für horizontale Anwendungen des Rotationslasers vorgesehen ist. Der Rotationslaser 11 ist auf einem motorisierten Stativ **14** angeordnet, das eine automatische Höheneinstellung des Rotationslasers 11 in einer Höhenrichtung **15** ermöglicht. Zusätzlich kann eine Drehplattform **16** vorgesehen sein, die eine automatische Winkeleinstellung des Rotationslasers 11 um eine Drehachse **17** der Drehplattform 16 ermöglicht. Die Drehplattform 16 kann in das Stativ 14 integriert sein oder als separate Komponente, die auf dem Stativ 14 angeordnet wird, ausgebildet sein. Der Laserempfänger 12 ist mit einer Messfunktion ausgestattet, die eine Auftreffposition eines Laserstrahls auf ein Detektionsfeld **18** des Laserempfängers 12 ermittelt und den Abstand des Laserstrahls zu einer Nullposition **19** des Detektionsfeldes 18 darstellt.

Der Rotationslaser 11 ist als horizontal und vertikal einsetzbarer Rotationslaser ausgebildet, der einen um eine Rotationsachse **21** des Rotationslasers 11 rotierenden ersten Laserstrahl **22** und einen ruhenden zweiten Laserstrahl **23** aufweist. Der rotierende erste Laserstrahl 22 erzeugt eine Laserebene, die senkrecht zur Rotationsachse 21 angeordnet ist, und der zweite Laserstrahl 23 verläuft senkrecht zur Laserebene des ersten Laserstrahls 22.Bei der in FIG. 1 dargestellten Horizontallage des Rotationslasers 11 wird der erste Laserstrahl 22 verwendet und auf das Detektionsfeld 18 des Laserempfängers 12 ausgerichtet, wobei der Laserempfänger 12 in einer Längsanordnung ausgerichtet ist.

Die Ausrichtung des Laserempfängers 12 ist mittels des Detektionsfeldes 18 und einer Lotrichtung **24** definiert. Das Detektionsfeld 18 des Laserempfängers 12, mit dem die Auftreffposition des ersten oder zweiten Laserstrahls 22, 23 erfasst wird, weist in einer Längsrichtung **25** eine Detektionshöhe **H_{D}** und in einer Querrichtung **26** eine Detektionsbreite **B_{D}** auf. Die Längsrichtung 25 entspricht der Messrichtung des Laserempfängers 12 und die Querrichtung 26 ist senkrecht zur Längsrichtung 25 ausgerichtet, wobei die Längs- und Querrichtung 25, 26 parallel zu einer Oberseite des Detektionsfeldes 18 verlaufen. Als Längsanordnung wird die Ausrichtung des Laserempfängers 12 bezeichnet, in der die Längsrichtung 25 des Detektionsfeldes 18 parallel zur Lotrichtung 24 ausgerichtet ist, und als Queranordnung die Ausrichtung des Laserempfängers 12, in der die Querrichtung 26 des Detektionsfeldes 18 parallel zur Lotrichtung 24 ausgerichtet ist.

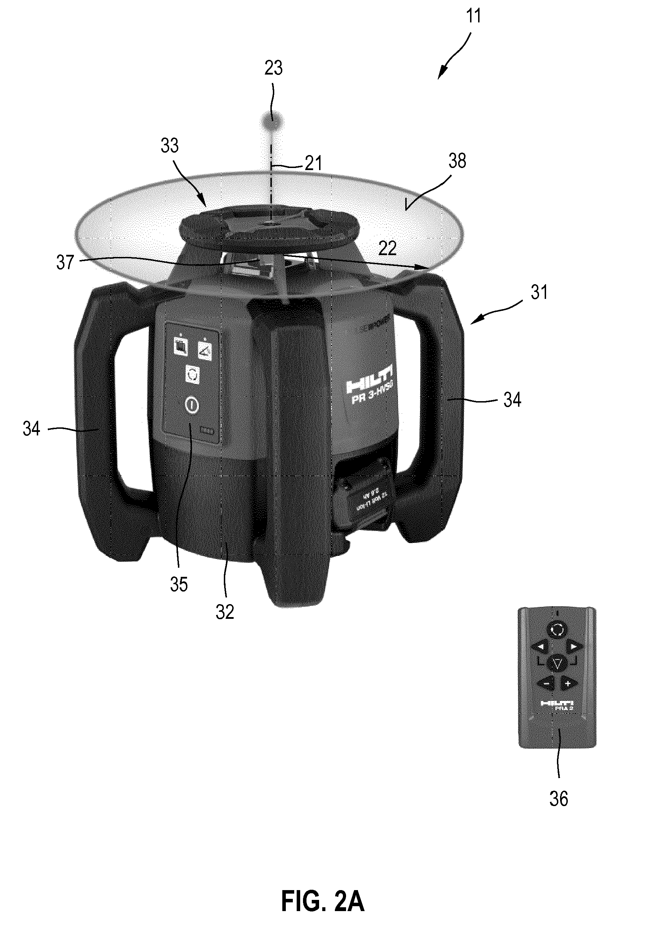

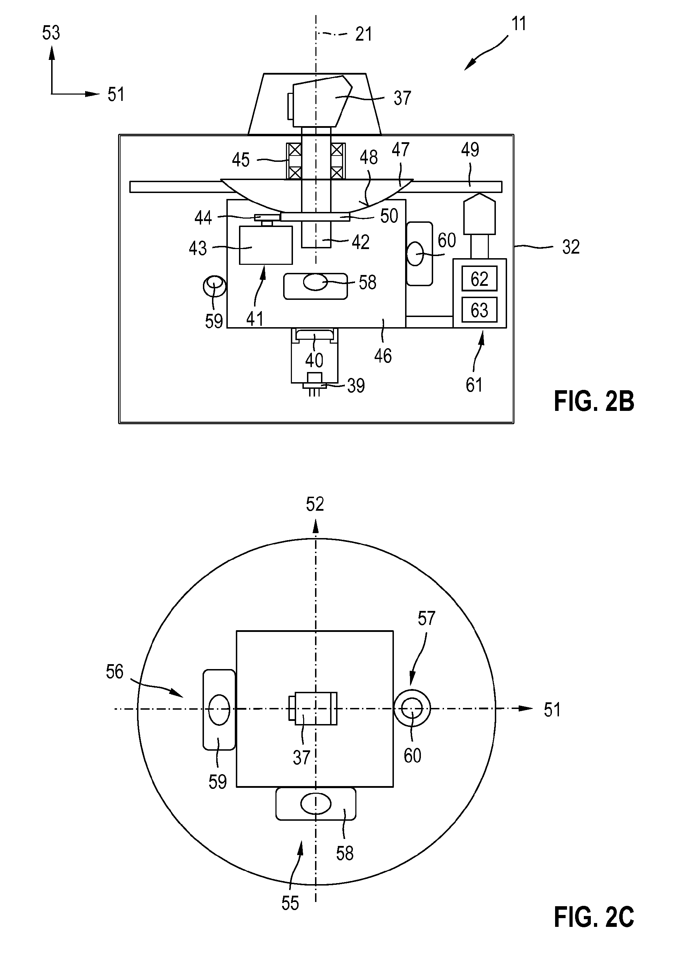

**FIGN. 2A-C** zeigen den Rotationslaser 11 in einer dreidimensionalen Darstellung (FIG. 2A) und die wesentlichen Komponenten des Rotationslasers 11 in einer schematischen Darstellung, wobei FIG. 2B die Komponenten in einer Vertikalebene parallel zur Rotationsachse 21 und FIG. 2C die Komponenten in einer Horizontalebene senkrecht zur Rotationsachse 21 darstellt.

Der Rotationslaser 11 umfasst ein Gerätegehäuse **31** und eine im Gerätegehäuse 31 angeordnete Messeinrichtung. Das Gerätegehäuse 31 besteht aus einem Grundgehäuse **32,** einem Rotationskopf **33** und mehreren Handgriffen **34.** Die Bedienung des Rotationslasers 11 erfolgt über eine Bedienungseinrichtung **35,** die in das Grundgehäuse 32 integriert ist und von außen bedienbar ist. Neben der in das Grundgehäuse 32 integrierten Bedienungseinrichtung 35 kann eine Fernbedienung **36** vorgesehen sein, die über eine Kommunikationsverbindung mit dem Rotationslaser 11 verbindbar ist. Die Messeinrichtung des Rotationslasers 11 erzeugt im Inneren des Grundgehäuses 32 einen Laserstrahl, der auf eine um die Rotationsachse 21 rotierende Umlenkoptik **37** trifft. Ein erster Teil des Laserstrahls wird von der Umlenkoptik 37 um 90° umgelenkt und bildet den ersten Laserstrahl 22 des Rotationslasers 11, der eine Laserebene **38** aufspannt. Ein zweiter Teil des Laserstrahls tritt durch die Umlenkoptik 37 hindurch und bildet den zweiten Laserstrahl 23 des Rotationslasers 11. Abhängig von der Rotationsgeschwindigkeit, mit der der erste Laserstrahl 22 um die Rotationsachse 21 rotiert wird, werden ein Rotationsmodus, ein Linienmodus und ein Punktmodus des Rotationslasers 11 unterschieden.

FIGN. 2B, C zeigen die wesentlichen Komponenten des Rotationslasers 11 in einer schematischen Darstellung. Der Rotationslaser 11 umfasst eine Lasereinrichtung mit einer Strahlquelle **39,** die einen Laserstrahl erzeugt, und einer Kollimationsoptik **40.** Die Strahlquelle 39 ist beispielsweise als Halbleiterlaser ausgebildet, der den Laserstrahl im sichtbaren Wellenlängenspektrum erzeugt, beispielsweise einen roten Laserstrahl mit einer Wellenlänge von 635 nm oder einen grünen Laserstrahl mit einer Wellenlänge von 532 nm. Nach dem Austritt des Laserstrahls aus der Strahlquelle 39 wird der Laserstrahl mit Hilfe der Kollimationsoptik 40 kollimiert. Alternativ kann die Kollimationsoptik in die Strahlquelle integriert sein oder bei einer Strahlquelle 39 mit einer hohen Strahlqualität und geringen Divergenz kann die Kollimationsoptik entfallen.

Der kollimierte Laserstrahl trifft auf die Umlenkoptik 37, die den ersten und zweiten Laserstrahl 22, 23 trennt. Die Umlenkoptik 37 ist mit einer Dreheinrichtung **41** verbunden, die die Umlenkoptik 37 um die Rotationsachse 21 bewegt. Die Dreheinrichtung 41 umfasst eine drehbare Welle **42,** eine Motoreinheit **43** und eine Übertragungseinrichtung **44,** die beispielsweise in Form eines Zahnriemens ausgebildet ist und die Bewegung der Motoreinheit 43 auf die Welle 42 überträgt. Die Umlenkoptik 37 ist mit der drehbaren Welle 42 gekoppelt und um die Rotationsachse 21 drehbar ausgebildet. Die Welle 42 ist in einem Drehlager **45** eines Statorteils **46** gelagert, das mit einer Kugelkalotte **47** verbunden ist. Die Kugelkalotte 47 ist in einer Kugelkalottenlagerung **48** in einem gehäusefesten Montagerahmen **49** um zwei zur Rotationsebene (Ebene senkrecht zur Rotationsachse 21) senkrechte Schwenkebenen neigbar gelagert. Der Rotationslaser 11 umfasst eine Messeinrichtung **50,** die den Drehwinkel der Welle 42 während der Rotation um die Rotationsachse 21 misst. Die Messeinrichtung 50 ist beispielsweise als Winkelencoder ausgebildet und besteht aus einer Maßscheibe, die mit der Welle 42 drehfest verbunden ist, einer Abtasteinrichtung, mit der die Maßscheibe abgetastet wird, und einem Auswerte- und Steuerelement.

Der Rotationslaser 11 ist als horizontal und vertikal einsetzbarer Rotationslaser ausgebildet, wobei sich ein horizontal und vertikal einsetzbarer Rotationslaser durch eine zusätzliche Geräteachse von einem horizontal einsetzbaren Rotationslaser unterscheidet. Der Rotationslaser 11 weist als Geräteachsen eine erste Horizontalachse **51** und eine zweite Horizontalachse **52** auf, die senkrecht zueinander verlaufen und eine Geräteebene aufspannen. Die erste und zweite Horizontalachse 51, 52 werden am Rotationskopf 33 des Rotationslasers 11 über Anzeigeelemente angezeigt. Der horizontal und vertikal einsetzbare Rotationslaser 11 weist neben der ersten und zweiten Horizontalachse 51, 52 eine weitere Geräteachse auf, die als Vertikalachse **53** bezeichnet wird und im Idealfall senkrecht zur Geräteebene der ersten und zweiten Horizontalachse 51, 52 ausgerichtet ist.

Der Rotationslaser 11 ist als selbstnivellierender Rotationslaser ausgebildet, der sich automatisch nivelliert, wenn das Gerätegehäuse 31 des Rotationslasers 11 innerhalb eines Selbstnivellierbereiches aufgestellt wird. Der Selbstnivellierbereich von Rotationslasern liegt typischerweise bei 5°. Der Rotationslaser 11 umfasst eine Nivelliereinrichtung, die die Geräteachsen des Rotationslasers 11 unabhängig von einer Ausrichtung des Gerätegehäuses 31 in einen definierten Zustand ausrichtet. Die Nivelliereinrichtung umfasst eine erste Nivelliereinheit **55,** die die erste Horizontalachse 51 in einen ersten definierten Zustand ausrichtet, eine zweite Nivelliereinheit **56,** die die zweite Horizontalachse 52 in einen zweiten definierten Zustand ausrichtet, und eine dritte Nivelliereinheit **57,** die die Vertikalachse 53 in einen dritten definierten Zustand ausrichtet.

Die erste Nivelliereinheit 55 umfasst einen ersten Neigungssensor **58** und ein erstes Verstellelement, die zweite Nivelliereinheit 56 umfasst einen zweiten Neigungssensor **59** und ein zweites Verstellelement und die dritte Nivelliereinheit 57 umfasst einen dritten Neigungssensor **60** und ein drittes Verstellelement. Die Verstellelemente der Nivelliereinheiten 55, 56, 57 sind in eine Neigungseinrichtung **61** integriert, die einen ersten Verstellmotor **62** und einen zweiten Verstellmotor **63** aufweist. Der erste Verstellmotor 62 neigt den Montagerahmen 49 um eine erste Schwenkachse, die mit der zweiten Horizontalachse 52 zusammenfällt, und der zweite Verstellmotor 63 neigt den Montagerahmen 49 um eine zweite Schwenkachse, die mit der ersten Horizontalachse 51 zusammenfällt. Der erste Verstellmotor 62 bildet das erste Verstellelement der ersten Nivelliereinheit 55 und der zweite Verstellmotor 63 bildet das zweite Verstellelement der zweiten Nivelliereinheit 56. Da die Vertikalachse 53 senkrecht zur Horizontalebene der ersten und zweiten Horizontalachse 51, 52 ausgerichtet ist, kann die Ausrichtung der Vertikalachse 53 mittels des ersten und zweiten Verstellmotors 62, 63 eingestellt werden. Der erste und zweite Verstellmotor 62, 63 bilden gemeinsam das dritte Verstellelement der dritten Nivelliereinheit 57.

Die horizontale Ausrichtung der Laserebene bzw. der Gerätebene stellt einen bevorzugten definierten Zustand dar, in den ein Rotationslaser 11 in Horizontallage ausgerichtet werden soll, wobei die horizontal ausgerichtete Geräteebene auch als Horizontalebene bezeichnet wird. Die vertikale Ausrichtung der Laserebene bzw. der Geräteebene stellt einen bevorzugten definierten Zustand dar, in den ein Rotationslaser 11 in Vertikallage ausgerichtet werden soll, wobei die vertikal ausgerichtete Geräteebene auch als Vertikalebene bezeichnet wird. Die Laserebene 38, die der rotierende erste Laserstrahl 22 erzeugt, kann mittels der Neigungseinrichtung 61 gegenüber der Horizontalebene oder der Vertikalebene des Rotationslasers 11 geneigt werden. Der Rotationslaser 11 kann die Laserebene des rotierenden ersten Laserstrahls 22 in einer Neigungsrichtung oder in zwei Neigungsrichtungen neigen. Die Neigung der Laserebene erfolgt im nivellierten Zustand des Rotationslasers 11. Der Rotationslaser 11 kann in Horizontallage oder in Vertikallage geneigt werden.

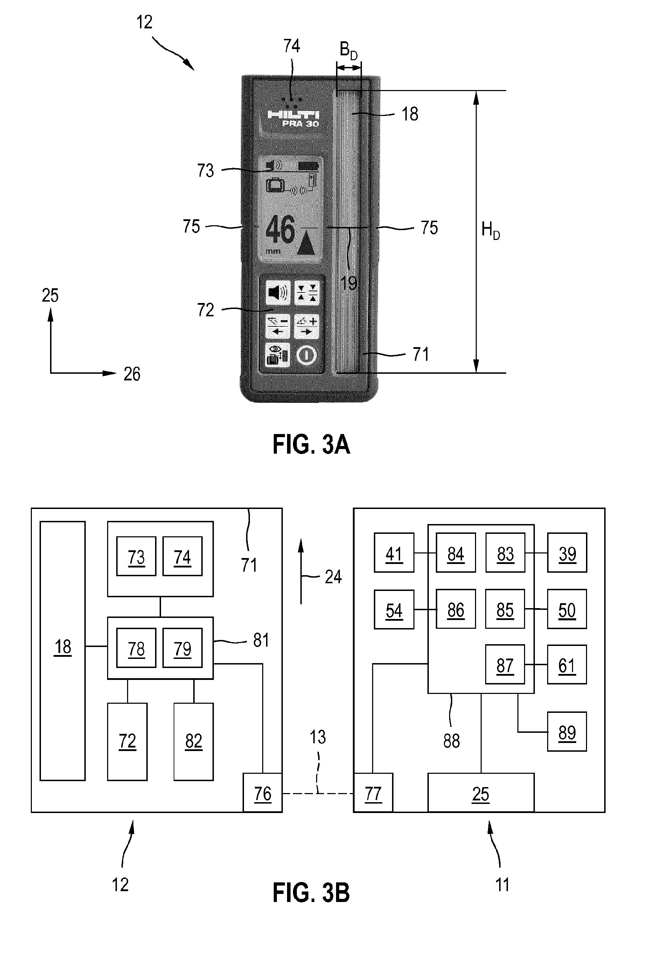

**FIGN. 3A****, B** zeigen den Laserempfänger 12 in einer dreidimensionalen Darstellung (FIG. 3A) und die wesentlichen Komponenten des Laserempfängers 12 sowie das Zusammenwirken mit dem Rotationslaser 11 in einer schematischen Darstellung (FIG. 3B). Der Laserempfänger 12 ist mit einer Messfunktion ausgestattet, die den Abstand eines Laserstrahls zur Nullposition 19 des Detektionsfeldes 18 bestimmt.

Der Laserempfänger 12 umfasst ein Empfängergehäuse **71,** eine Bedienungseinrichtung **72,** ein optisches Display **73,** einen Lautsprecher **74** und das Detektionsfeld 18, mit dem die Auftreffposition eines Laserstrahls erfasst wird. Das Detektionsfeld 18 weist in der Längsrichtung 25 die Detektionshöhe H_{D} und in der Querrichtung 26 die Detektionsbreite B_{D} auf. Die Längsrichtung 25 entspricht der Messrichtung des Laserempfängers 12 und die Querrichtung 26 ist senkrecht zur Längsrichtung 25 ausgerichtet, wobei die Längs- und Querrichtung 25, 26 parallel zum Detektionsfeld 18 verlaufen.

Die Bedienungseinrichtung 72, das optische Display 73, der Lautsprecher 74 und das Detektionsfeld 18 sind in das Empfängergehäuse 71 des Laserempfängers 12 integriert. Über das optische Display 73 kann der Bediener Informationen über den Laserempfänger 12 ablesen. Dazu gehören beispielsweise ein Ladezustand des Laserempfängers 12, Informationen über die drahtlose Kommunikationsverbindung 13 zu einem Rotationslaser 11 und die eingestellte Lautstärke des Lautsprechers 74. Außerdem kann der Abstand eines Laserstrahls zur Nullposition 19 des Laserempfängers 12 als numerischer Wert optisch angezeigt werden. Alternativ oder zusätzlich zur optischen Anzeige auf dem optischen Display 73 kann der Abstand des Laserstrahls über den Lautsprecher 74 mitgeteilt werden. Die Nullposition 19 des Detektionsfeldes 18 wird am Empfängergehäuse 71 über Markierungskerben **75** angezeigt.

FIG. 3B zeigt die wesentlichen Komponenten des Laserempfängers 12 und das Zusammenwirken des Laserempfängers 12 mit dem Rotationslaser 11 in Form eines Blockdiagramms. Die Kommunikation zwischen dem Laserempfänger 12 und dem Rotationslaser 11 erfolgt über die Kommunikationsverbindung 13, die eine erste Sende-/Empfangseinheit **76** im Laserempfänger 12 mit einer zweiten Sende-/Empfangseinheit 77 im Rotationslaser 11 verbindet. Die erste und zweite Sende-/Empfangseinheit 76, 77 sind beispielsweise als Funkmodule ausgebildet und die Kommunikation zwischen dem Laserempfänger 12 und dem Rotationslaser 11 erfolgt über eine als Funkverbindung ausgebildete Kommunikationsverbindung 13.

Das Detektionsfeld 18, das optische Display 73 und der Lautsprecher 74 sind mit einer Auswerteeinrichtung **78** verbunden, die im Inneren des Empfängergehäuses 71 angeordnet ist. Die Auswerteeinrichtung 78 ist mit einer Steuereinrichtung **79** zur Steuerung des Laserempfängers 12 verbunden, wobei die Auswerteeinrichtung 78 und die Steuereinrichtung 79 in eine beispielsweise als Mikrocontroller ausgebildete Kontrolleinrichtung **81** integriert sind. Der Laserempfänger 12 umfasst zusätzlich ein Sensormodul **82,** das im Inneren des Empfängergehäuses 71 angeordnet ist und das mit der Kontrolleinrichtung 81 verbunden ist. Mit Hilfe des Sensormoduls 82 kann eine Neigung des Laserempfängers 12 relativ zur Lotrichtung 24 gemessen werden. Das Sensormodul 82 umfasst einen 2-Achsen-Beschleunigungssensor oder zwei 1-Achs-Beschleunigungssensoren.

Zu den Komponenten des Rotationslasers 11, die über Steuerelemente gesteuert werden oder mit einem Auswertelement verbunden sind, gehören die Strahlquelle 39, die Dreheinrichtung 41, die Messeinrichtung 50 sowie die Nivelliereinrichtung 54 und, falls vorhanden, die Neigungseinrichtung 61. Ein erstes Steuerelement **83** zur Steuerung der Strahlquelle 39, ein zweites Steuerelement **84** zur Steuerung der Dreheinrichtung 41, ein Auswerte- und Steuerelement **85** für die Messeinrichtung 50, ein drittes Steuerelement **86** zur Steuerung der Nivelliereinrichtung 54 und ein viertes Steuerelement **87** zur Steuerung der Neigungseinrichtung 61 können als getrennte Komponenten ausgebildet sein oder, wie in FIG. 3B dargestellt, in eine gemeinsame Kontrolleinrichtung **88,** die beispielsweise als Mikrocontroller ausgebildet ist, integriert sein. Die Steuerelemente sind über Kommunikationsverbindungen mit den zu steuernden Komponenten des Rotationslasers 11 verbunden.

Die Rotationslaser 11 umfasst zusätzlich einen Temperatursensor **89,** der im Gerätegehäuse 31 des Rotationslasers 11 angeordnet ist. Der Temperatursensor 89 misst die Temperatur im Gerätegehäuse 31 und übermittelt die Temperatur an die Kontrolleinrichtung 89 des Rotationslasers 11. Da die Ausrichtung der Neigungssensoren 58, 59, die die erste und zweite Horizontalachse 51, 52 des Rotationslasers 11 in den horizontalen Zustand ausrichten, temperaturabhängig ist und der Rotationslaser 11 in einem großen Temperaturbereich, beispielsweise zwischen -20 °C und +50 °C eingesetzt werden kann, ist es vorteilhaft, wenn in der Kontrolleinrichtung 88 des Rotationslasers 11 mehrere Nulllagen u gespeichert sind. Dazu können für den ersten Neigungssensor 58 mehrere erste Nulllagen υ₁ und für den zweiten Neigungssensor 59 mehrere zweite Nulllagen υ₂ in Abhängigkeit von der Temperatur aufgenommen und in einer Kennlinie oder Tabelle gespeichert werden. Die zur gemessenen Temperatur zugehörige Nulllage wird aus der Kennlinie bzw. Tabelle abgelesen und die Horizontalachse wird in den durch die Nulllage definierten horizontalen Zustand ausgerichtet.

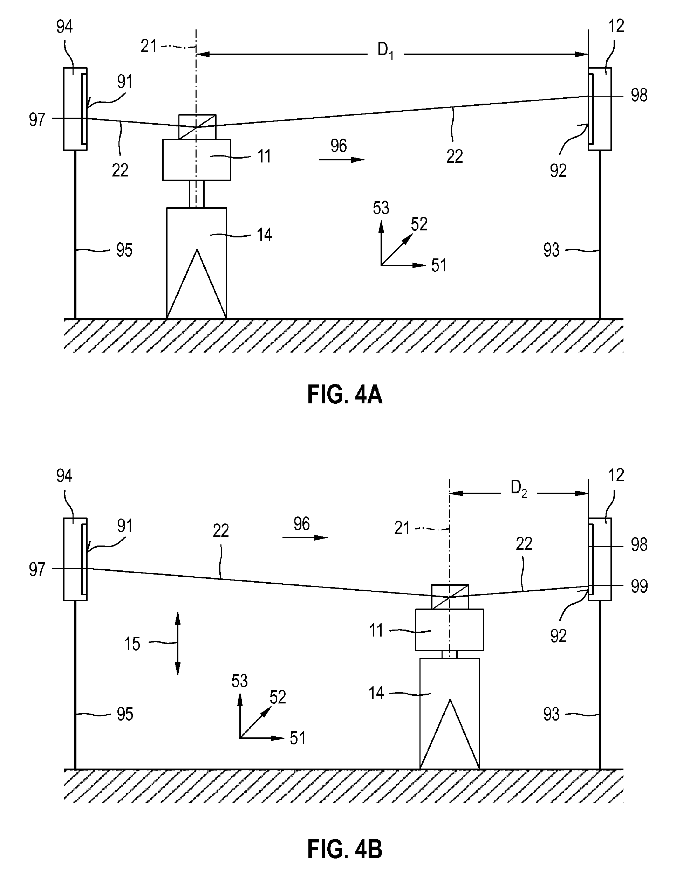

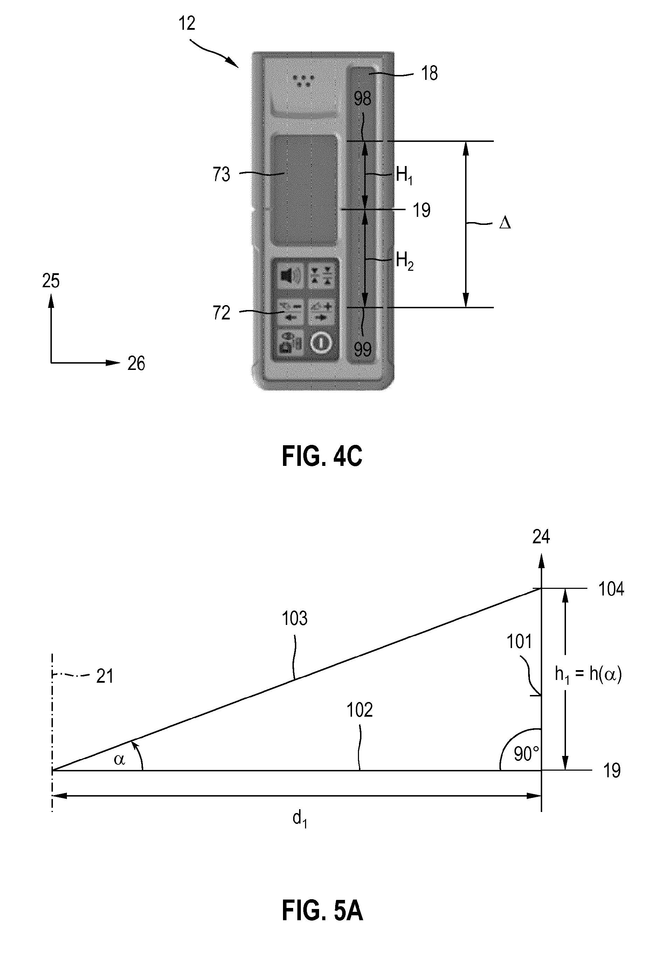

**FIGN. 4A-C** zeigen die Vorrichtung 10 der FIG. 1 mit dem Rotationslaser 11 und dem Laserempfänger 12 bei der Ausführung des erfindungsgemäßen Verfahrens zum Überprüfen des Rotationslasers 11 auf Konusfehler. FIG. 4A zeigt den Rotationslaser 11 in einer ersten Ortsposition, in der der Rotationslaser 11 eine erste Messentfernung **D₁** zum Laserempfänger 12 aufweist, FIG. 4B zeigt den Rotationslaser 11 in einer zweiten Ortsposition, in der der Rotationslaser 11 eine zweite Messentfernung **D₂** zum Laserempfänger 12 aufweist, und FIG. 4C zeigt den Laserempfänger 12 mit den Auftreffpositionen des rotierenden ersten Laserstrahls 22 auf dem Detektionsfeld 18 in der ersten und zweiten Ortsposition.

Das erfindungsgemäße Verfahren zum Überprüfen des Rotationslasers 11 auf Konusfehler wird in Horizontallage des Rotationslasers 11 und in Längsanordnung des Laserempfängers 12 ausgeführt. Der Rotationslaser 11 wird in Horizontallage auf dem Stativ 14 oder auf einem stabilen Untergrund aufgestellt. Die Verwendung des Stativs 14 hat den Vorteil, dass das erfindungsgemäße Verfahren in einer Höhe durchgeführt wird, in der Temperaturschwankungen geringer ausfallen als am Boden. Außerdem ermöglicht das Stativ 14 eine automatische Höheneinstellung des Rotationslasers 11 mittels der Höheneinstelleinrichtung 16.

Um die Horizontallage des Rotationslasers 11 einzustellen, werden die erste und zweite Horizontalachse 51, 52 in einen horizontalen Zustand ausgerichtet, wobei der horizontale Zustand der ersten Horizontalachse 51 durch die erste Nulllage υ₁ des ersten Neigungssensors 58 und der horizontale Zustand der zweiten Horizontalachse 52 durch die zweite Nulllage υ₂ des zweiten Neigungssensors 59 festgelegt ist. Die erste Horizontalachse 51 wird mittels der ersten Nivelliereinheit 55 in die erste Nulllage υ₁ ausgerichtet und die zweite Horizontalachse 52 wird mittels der zweiten Nivelliereinheit 59 in die zweite Nulllage υ₂ ausgerichtet. In der Kontrolleinrichtung 89 des Rotationslasers 11 sind die erste Nulllage υ₁ für den ersten Neigungssensor 58 und die zweite Nulllage υ₂ für den zweiten Neigungssensor 59 gespeichert.

Die Überprüfung des Rotationslasers 11 auf Konusfehler wird zwischen einer ersten Messfläche **91** und einer zweiten Messfläche **92** durchgeführt. Die erste und zweite Messfläche dienen dazu, die Auftreffpositionen des Laserstrahls zu bestimmen. Der Laserempfänger 12 ist an einer Messlatte **93** befestigt und umfasst die zweite Messfläche 92. Die erste Messfläche 91 ist im Ausführungsbeispiel in einen weiteren Laserempfänger **94** integriert, der an einer weiteren Messlatte **95** befestigt ist. Der weitere Laserempfänger 94 entspricht im Aufbau dem Laserempfänger 12 und ist mit einer Messfunktion ausgestattet.

Der Rotationslaser 11 wird nacheinander in der ersten und zweiten Ortsposition angeordnet. In der ersten Ortsposition ist der Rotationslaser 11 in der ersten Messentfernung D₁ zur zweiten Messfläche 92 aufgestellt und die erste Horizontalachse 51 ist auf die zweite Messfläche 92 ausgerichtet. Alternativ kann die zweite Horizontalachse 52 des Rotationslasers 11 oder eine beliebige Achse in der Horizontalebene auf die zweite Messfläche 92 ausgerichtet sein. Die Achse, die in der ersten Ortsposition auf die zweite Messfläche 92 ausgerichtet ist, wird als Messrichtung **96** bezeichnet. In der zweiten Ortsposition ist der Rotationslaser 11 in der zweiten Messentfernung D₂ zur zweiten Messfläche 92 aufgestellt und die Messrichtung 96 ist auf die zweite Messfläche 92 ausgerichtet. Die erste und zweite Messentfernung D₁, D₂ werden zwischen der Rotationsachse 21 des Rotationslasers 11 und der Vorderseite des Detektionsfeldes 18, die die zweite Messfläche 92 bildet, gemessen. Im Ausführungsbeispiel der FIGN. 4A-C ist die erste Horizontalachse 51 des Rotationslasers 11 in der ersten und zweiten Ortsposition auf die zweite Messfläche 92 ausgerichtet.

In der ersten Ortsposition rotiert der Laserstrahl 22 um die Rotationsachse 21 und trifft auf die erste Messfläche 91 und die zweite Messfläche 92. Die Auftreffposition des rotierenden Laserstrahls 22 auf der ersten Messfläche 91 wird von der Auswerteeinrichtung des weiteren Laserempfängers 94 als erster Kontrollpunkt **97** bestimmt. Die Auftreffposition des rotierenden Laserstrahls 21 auf der zweiten Messfläche 92 wird von der Auswerteeinrichtung 78 des Laserempfängers 12 als zweiter Kontrollpunkt **98** bestimmt und der Abstand des zweiten Kontrollpunktes 98 zur Nullposition 19 des Detektionsfeldes 18 wird als erster Höhenversatz **H₁** gespeichert. Der Rotationslaser 11 wird aus der ersten Ortsposition in die zweite Ortsposition bewegt (FIG. 4B). In der zweiten Ortsposition rotiert der Laserstrahl 22 um die Rotationsachse 21 und trifft auf die erste Messfläche 91 und die zweite Messfläche 92. Der Rotationslaser 11 wird mittels der Höheneinstelleinrichtung des Stativs 14 in der Höhenrichtung 15 verstellt, bis die Auftreffposition des Laserstrahls 22 auf der ersten Messfläche 91 mit dem ersten Kontrollpunkt 96 übereinstimmt. Die Auftreffposition des rotierenden Laserstrahls 22 auf der zweiten Messfläche 92 wird von der Auswerteeinrichtung 78 des Laserempfängers 12 als dritter Kontrollpunkt **99** bestimmt und der Abstand des dritten Kontrollpunktes 99 zur Nullposition 19 des Detektionsfeldes 18 wird als zweiter Höhenversatz **H₂** gespeichert.

Die Auswerteeinrichtung 78 des Laserempfängers 12 berechnet den Abstand zwischen dem zweiten Kontrollpunkt 98 und dritten Kontrollpunkt 99 als Differenz Δ aus dem ersten und zweiten Höhenversatz H₁, H₂ (FIG. 4C). Die Auswertung kann wie beschrieben von der Auswerteeinrichtung 78 des Laserempfängers 12 durchgeführt werden. Alternativ kann die Auswertung von einer entsprechenden Komponente im Rotationslaser 11 oder einer weiteren Komponente durchgeführt werden. Wenn die Auswertung nicht von der Auswerteeinrichtung 78 des Laserempfängers 12 durchgeführt wird, werden der zweite und dritte Kontrollpunkt 98, 99 oder die Differenz Δ über eine Kommunikationsverbindung an die entsprechende Komponente übermittelt. Die Auswerteeinrichtung 78 des Laserempfängers 12 berechnet aus der Differenz Δ = H₁ - H₂, der ersten Messentfernung D₁ und der zweiten Messentfernung D₂ zwischen dem Rotationslaser 11 und dem Laserempfänger 12 einen Konusfehler δ und vergleicht den Konusfehler δ mit einem festgelegten Maximalfehler **δₘₐₓ**. Der Konusfehler δ kann gemäß der Formel tan(δ) = ½ (H₁ - H₂)/(D₁ - D₂) berechnet werden. Wenn der Konusfehler δ grösser als der Maximalfehler δₘₐₓ, ist eine Justierung des Rotationslasers 11 erforderlich.

Die erste und zweite Messentfernung D₁, D₂ zwischen dem Rotationslaser 11 und dem Laserempfänger 12 werden in einem ersten und/oder zweiten Messverfahren mittels des Rotationslasers 11 und des Laserempfängers 12 bestimmt. Die erste Messentfernung D₁ zwischen dem Rotationslaser 11 und dem Laserempfänger 12 wird in der ersten Ortsposition bestimmt und die zweite Messentfernung D₂ zwischen dem Rotationslaser 11 und dem Laserempfänger 12 wird in der zweiten Ortsposition bestimmt. Die können die Messentfernungen D₁, D₂ als erste Distanz **d₁** mittels eines ersten Messverfahrens, als zweite Distanz **d₂** mittels eines zweiten Messverfahrens oder als gemittelte Distanz **d** aus der ersten und zweiten Distanz d₁, d₂ bestimmt werden. Dabei erfolgt die Bestimmung der ersten und zweiten Distanz d₁, d₂ in Horizontallage des Rotationslasers 11 und Längsanordnung des Laserempfängers 12.

Beim zweiten Messverfahren wird der Rotationslaser 11 in einem Rotationsmodus betrieben und der rotierende erste Laserstrahl 22 mit einer konstanten Rotationsgeschwindigkeit **v_{R}** um die Rotationsachse 21 bewegt. Das zweite Messverfahren umfasst die Verfahrensschritte: Der Rotationslaser 11 wird horizontal ausgerichtet und der erste Laserstrahl 22 mit der konstanten Rotationsgeschwindigkeit v_{R} um die Rotationsachse 21 rotiert. Die Auswerteeinrichtung 78 des Laserempfängers 12 bestimmt eine Signallänge **tₛ** des rotierenden ersten Laserstrahls 22 auf dem Detektionsfeld 18 des Laserempfängers 12. Die zweite Distanz d₂ kann aus der Rotationsgeschwindigkeit v_{R} des ersten Laserstrahls 22, der Signallänge tₛ des ersten Laserstrahls 22 und der Detektionsbreite B_{D} des Detektionsfeldes 18 gemäß tₛ/t_{full} = B_{D}/(2πd₂) mit t_{full} = 60/v_{R} berechnet werden. Die Rotationsgeschwindigkeit v_{R} wird in Umdrehungen pro Minute angegeben und die für eine Umdrehung erforderliche Zeit t_{full} beträgt 60/v_{R}. **FIGN. 5A-C** zeigen drei Varianten des ersten Messverfahrens, mit dem die Messentfernung zwischen dem Rotationslaser 11 und dem Laserempfänger 12 als erste Distanz d₁ bestimmt wird. Das erste Messverfahren wird in der ersten Ortsposition angewandt, um die erste Messentfernung D₁ zwischen dem Rotationslaser 11 und dem Laserempfänger 12 zu bestimmen, und in der zweiten Ortsposition, um die zweite Messentfernung D₂ zwischen dem Rotationslaser 11 und dem Laserempfänger 12 zu bestimmen.

Der Laserempfänger 12 ist parallel zur Lotrichtung 24 ausgerichtet und die erste Distanz d₁ wird zwischen der Rotationsachse 21 des Rotationslasers 11 und einer Vorderseite **101** des Detektionsfeldes 18 des Laserempfängers 12 gemessen. Zu Beginn des ersten Messverfahrens befinden sich die Horizontalachsen 51, 52 des Rotationslasers 11 im horizontalen Zustand oder werden in den horizontalen Zustand ausgerichtet. Der Rotationslaser 11 sendet einen horizontal ausgerichteten Laserstrahl **102** aus.

Beim ersten Messverfahren wird der Rotationslaser 11 in einem Punktmodus betrieben und der Laserstrahl wird nicht um die Rotationsachse 21 bewegt. Der Laserstrahl wird um einen bekannten Neigungswinkel **α** geneigt und die Auftreffposition des geneigten Laserstrahls auf dem Detektionsfeld 18 des Laserempfängers 12 wird als Messpunkt bestimmt und der Höhenversatz des Messpunktes als Höhe gespeichert. Dabei kann die Neigung des Laserstrahls mittels der Nivelliereinrichtung 54 oder der Neigungseinrichtung 61 durchgeführt werden. Die Verwendung der Nivelliereinrichtung 54 hat den Vorteil, dass die Messentfernung D auch von Rotationslasern 11 ohne Neigungseinrichtung 61 bestimmt werden kann. Das erste Messverfahren setzt voraus, dass der Rotationslaser 11 so zum Laserempfänger 12 ausgerichtet ist, dass die Neigungsrichtung annähernd senkrecht zum Detektionsfeld 18 des Laserempfängers 12 verläuft. Abweichungen von der senkrechten Ausrichtung führen zu Messfehlern, die für kleine Abweichungen tolerierbar sind.

Der Rotationslaser 11 ist in der ersten und zweiten Ortsposition in der Messrichtung 96 auf die zweite Messfläche ausgerichtet, wobei die erste Horizontalachse 51, die zweite Horizontalachse 52 oder eine beliebige Achse in der Horizontalebene als Messrichtung 96 definiert sein kann. Wenn die erste oder zweite Horizontalachse 51, 52 als Messrichtung 96 verwendet wird, ist der Rotationslaser 11 für die Distanzmessung in einer geeigneten Winkelposition angeordnet. Dabei erfolgt die Neigung des Laserstrahls 102 mittels der ersten Nivelliereinheit 55, wenn die erste Horizontalachse 51 als Messrichtung 96 verwendet wird, und mittels der zweiten Nivelliereinheit 56, wenn die zweite Horizontalachse 52 als Messrichtung 96 verwendet wird. Wird eine beliebige Achse in der Horizontalebene als Messrichtung 96 verwendet, muss der Rotationslaser 11 für die Distanzmessung in eine entsprechende Winkelposition (erste oder zweite Horizontalachse 51, 52) verstellt werden.

FIG. 5A zeigt die erste Variante des ersten Messverfahrens. Der horizontal ausgerichtete Laserstrahl 102 wird auf die Nullposition 19 des Laserempfängers 12 eingestellt. Das Ausrichten des Laserstrahls 102 auf die Nullposition 19 kann beispielsweise mit einem höhenverstellbaren Stativ durchgeführt werden. Für eine vollautomatische Ausführung eignet sich ein Stativ mit einer sogenannten "Auto-Alignment-Funktion", wie sie in dem europäischen Patent EP 1 203 930 B1 beschrieben ist. Der Laserstrahl wird anschließend mit Hilfe der entsprechenden Nivelliereinheit der Nivelliereinrichtung 54 oder der Neigungseinrichtung 61 um den Neigungswinkel α geneigt. Die Auftreffposition des geneigten Laserstrahls **103** auf dem Detektionsfeld 18 des Laserempfängers 12 wird als erster Messpunkt **104** bestimmt und der Abstand des ersten Messpunktes 104 zur Nullposition 19 wird als erste Höhe **h₁** = **h(α)** gespeichert. Die erste Distanz d₁ kann aus dem Neigungswinkel α und einer Höhendifferenz Δh zwischen der ersten Höhe (h₁ = h(α)) und der Nullposition 19 des Detektionsfeldes 18 berechnet werden. Wenn die Nullposition 19 einer Höhe von 0 mm entspricht, kann die erste Distanz d₁ gemäß tan(α) = h(α)/d₁ berechnet werden.

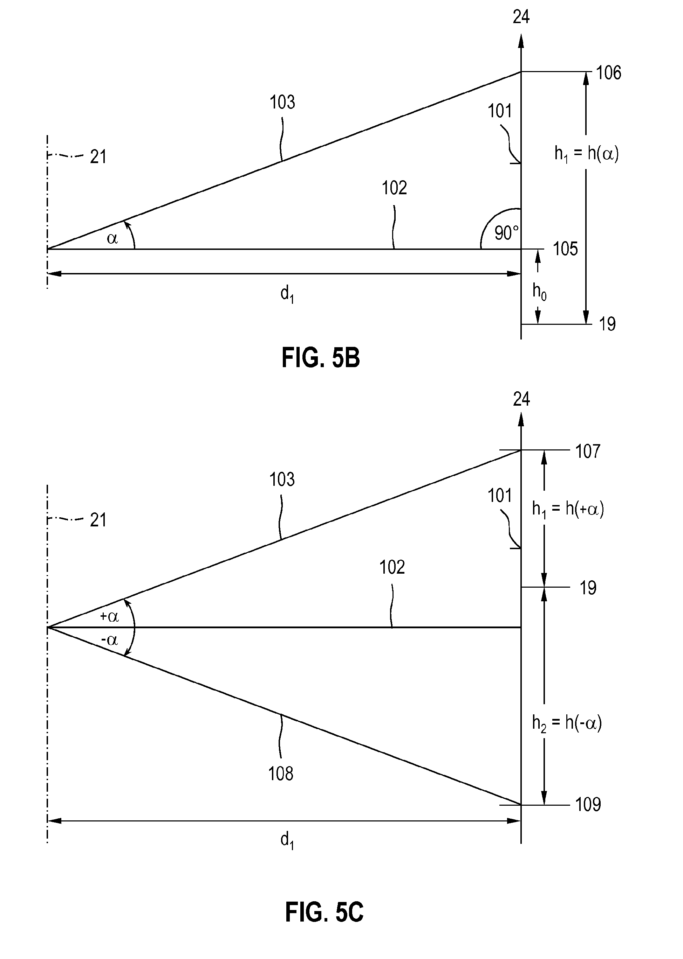

FIG. 5B zeigt die zweite Variante des ersten Messverfahrens. Der horizontal ausgerichtete Laserstrahl 102 wird auf das Detektionsfeld 18 des Laserempfängers 12 ausgesandt. Die Auftreffposition des Laserstrahls 102 auf dem Detektionsfeld 18 wird als Referenzpunkt **105** bestimmt und der Abstand des Referenzpunktes 105 zur Nullposition 19 als Referenzhöhe **h₀** = **h(0°)** gespeichert. Der Laserstrahl wird anschließend um den Neigungswinkel α geneigt und die Auftreffposition des geneigten Laserstrahls 103 auf dem Detektionsfeld 18 wird als erster Messpunkt **106** bestimmt und der Abstand des ersten Messpunktes 106 zur Nullposition 19 als erste Höhe **h₁** = **h(α)** gespeichert. Die erste Distanz d₁ kann aus dem Neigungswinkel α und der Höhendifferenz Δh zwischen der ersten Höhe h₁ = h(α) und der Referenzhöhe h₀ = h(0°) gemäß tan(α) = (h₁ - h₀)/d₁ berechnet werden.

FIG. 5C zeigt die dritte Variante des ersten Messverfahrens. Der horizontal ausgerichtete Laserstrahl 102 wird in einer positiven Neigungsrichtung um den Neigungswinkel α geneigt. Die Auftreffposition des geneigten Laserstrahls 103 auf dem Detektionsfeld 18 wird als erster Messpunkt 107 bestimmt und der Abstand des ersten Messpunktes 107 zur Nullposition 19 als erste Höhe **h₁** = **h(+α)** gespeichert. Anschließend wird der Laserstrahl in einer zur positiven Neigungsrichtung entgegen gerichteten negativen Neigungsrichtung um einen negativen Neigungswinkel **-α** geneigt. Die Auftreffposition des geneigten Laserstrahls **108** auf dem Detektionsfeld 18 wird als zweiter Messpunkt **109** bestimmt und der Abstand des zweiten Messpunktes 109 zur Nullposition 19 als zweite Höhe **h₂** = **h(-α)** gespeichert. Die erste Distanz d₁ kann aus dem Neigungswinkel α und der Höhendifferenz Δh zwischen der ersten Höhe h₁ = h(+α) und der zweiten Höhe h₂ = h(-α) gemäß tan(2α) = (h(+α) - h(-α))/d₁ berechnet werden.

Die Formeln zur Berechnung der Messentfernung D zwischen dem Rotationslaser 11 und dem Laserempfänger 12 und die Formeln zur Berechnung des Korrekturwinkels θ₁ beim Kalibrieren einer Horizontalachse gelten für einen Laserempfänger 12, der parallel zur Lotrichtung 24 ausgerichtet ist. Um Messfehler durch eine nicht-lotrechte Ausrichtung des Laserempfängers 12 zu korrigieren, umfasst der Laserempfänger 12 das Sensormodul 82, mit dem die Neigung des Laserempfängers 12 relativ zur Lotrichtung 24 gemessen wird.

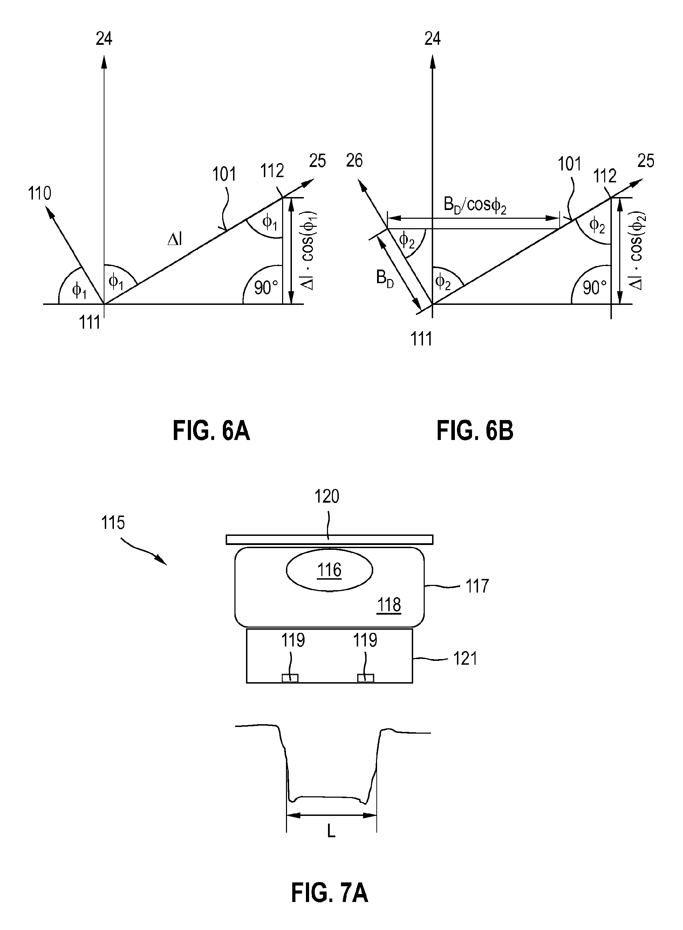

**FIGN. 6A****, B** zeigen die Ausrichtung des Laserempfängers 12 in einer schematischen Darstellung, wobei der Laserempfänger 12 zur Lotrichtung 24 um einen ersten Vertikalwinkel **φ₁** und/oder einen zweiten Vertikalwinkel **φ₂** geneigt sein kann. Dabei zeigt FIG. 6A den Laserempfänger 12, der in einer ersten Vertikalebene um den ersten Vertikalwinkel φ₁ geneigt ist, und FIG. 6B den Laserempfänger 12, der in einer zweiten Vertikalebene um den zweiten Vertikalwinkel φ₂ geneigt ist. Die erste Vertikalebene wird von der Lotrichtung 24 und einem Normalenvektor **110** des Detektionsfeldes 18 aufgespannt und die zweite Vertikalebene wird von der der Längsrichtung 25 und der Querrichtung 26 des Detektionsfeldes 18 aufgespannt. Der erste Vertikalwinkel φ₁ wird zwischen dem Normalenvektor 110 und der Lotrichtung 24 gemessen, wobei der erste Vertikalwinkel φ₁ die Abweichung von 90° zwischen dem Normalenvektor 110 und der Lotrichtung 24 darstellt, und der zweite Vertikalwinkel φ₂ wird zwischen der Lotrichtung 24 und der Längsrichtung 25 des Detektionsfeldes 18 gemessen.

Ein erster Laserstrahl trifft auf das Detektionsfeld 18 des Laserempfängers 12 und erzeugt eine erste Auftreffposition **111.** Ein zweiter Laserstrahl trifft auf das Detektionsfeld 18 des Laserempfängers 12 und erzeugt eine zweite Auftreffposition **112.** Die Auswerteeinrichtung 78 des Laserempfängers 12 berechnet einen Abstand Δl zwischen der ersten Auftreffposition 111 und der zweiten Auftreffposition 112. Beim Verfahren zum Überprüfen eines Rotationslasers auf Konusfehler entspricht der Abstand Δl der Differenz Δ aus dem ersten Höhenversatz H₁ und dem zweiten Höhenversatz H₂ und bei der Distanzmessung mittels des ersten Messverfahrens entspricht der Abstand Δl der Höhendifferenz Δh.

Ist der Laserempfänger 12 gegenüber der Lotrichtung 24 um den ersten Vertikalwinkel φ₁ geneigt, ist der vertikale Abstand **v₁** in Lotrichtung 24 in der ersten Vertikalebene kleiner als der Abstand Δl, den das Detektionsfeld 18 des Laserempfängers 12 gemessen hat (FIG. 6A). Für den vertikalen Abstand v₁ gilt der Zusammenhang Δl · cos(φ₁). Ist der Laserempfänger 12 gegenüber der Lotrichtung 24 um den zweiten Vertikalwinkel φ₂ geneigt, ist der vertikale Abstand v₂ in Lotrichtung 24 in der zweiten Vertikalebene kleiner als der Abstand Δl, den das Detektionsfeld 18 des Laserempfängers 12 gemessen hat (FIG. 6B). Für den vertikalen Abstand v₂ gilt der Zusammenhang Δl · cos(φ₂). Wenn der Laserempfänger 12 gegenüber der Lotrichtung 24 um den ersten Vertikalwinkel φ₁ und den zweiten Vertikalwinkel φ₂ geneigt ist, gilt für den vertikalen Abstand in Lotrichtung 24 der Zusammenhang Δl · cos(φ₁) · cos(φ₂). In den Formeln, die die Messfunktion des Laserempfängers 12 nutzen und Abstände Δl auf

dem Detektionsfeld 18 messen, werden die Abstände Δl mit einem Korrekturfaktor cos(φ₁) · cos(φ₂) multipliziert. Der Korrekturfaktor cos(φ₁) · cos(φ₂) ist bei der Distanzmessung der ersten und zweiten Messentfernung D₁, D₂ mittels des ersten Messverfahrens und bei der Bestimmung der Differenz Δ zwischen dem zweiten und dritten Kontrollpunkt 98, 99 zu berücksichtigen.

Der zweite Vertikalwinkel φ₂ sollte auch bei der Distanzmessung mittels des zweiten Messverfahrens berücksichtigt werden. Durch die Neigung des Laserempfängers 12 um den zweiten Vertikalwinkel φ₂ ist der horizontale Abstand senkrecht zur Lotrichtung 24, den der rotierende erste Laserstrahl 22 auf dem Detektionsfeld 18 überstreift, grösser als die Detektionsbreite B_{D} des Detektionsfeldes 18 in Querrichtung 26. Die Signallänge des rotierenden ersten Laserstrahls 22 entspricht dem horizontalen Abstand auf dem Detektionsfeld 18. Für den horizontalen Abstand gilt der Zusammenhang B_{D}/cos(φ₂). Eine Neigung des Laserempfängers 12 um den ersten Vertikalwinkel φ₁ verändert den horizontalen Abstand, den der rotierende erste Laserstrahl 22 auf dem Detektionsfeld 18 überstreift, nicht.

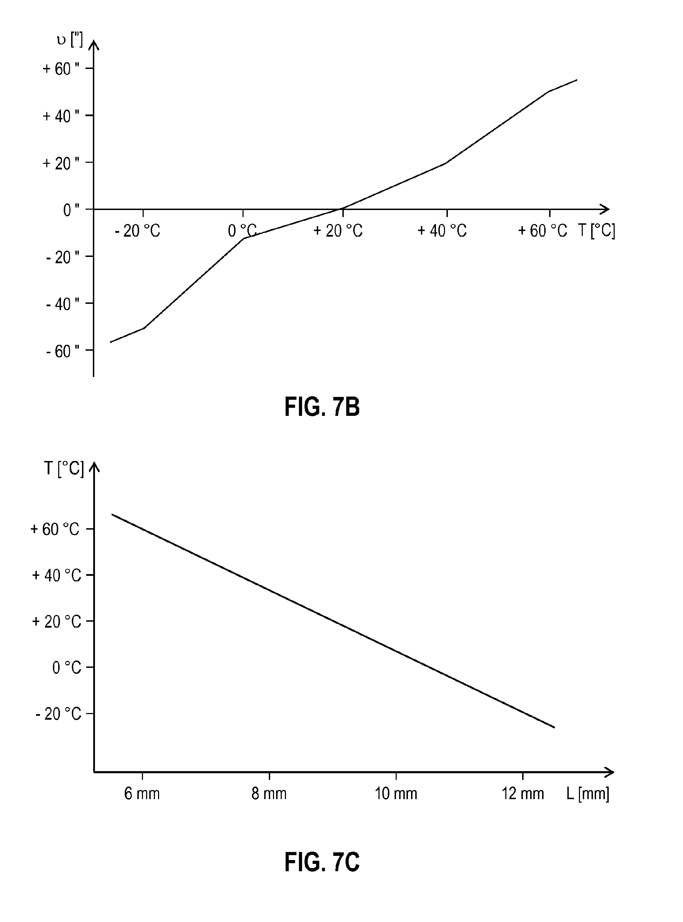

**FIGN. 7A-C** zeigen den Aufbau eines optischen Neigungssensors **115** mit einer Gasblase **116** (FIG. 7A), eine Kennlinie, die die Nulllage u des Neigungssensors 115 abhängig von einer Temperatur **T** darstellt (FIG. 7B), und eine weitere Kennlinie, die die Temperatur T abhängig von einer Blasenlänge **L** der Gasblase 116 darstellt (FIG. 7C).

Bei Außenanwendungen des Rotationslasers 11 kann es durch Sonneneinstrahlung zu Temperaturschwankungen im Gerätegehäuse 31 des Rotationslasers 11 kommen, so dass die gemessene Temperatur von der Position des Temperatursensors 89 im Gerätegehäuse 31 abhängig ist. Um Messfehler bei der Temperaturmessung zu reduzieren, können die Temperaturen der Neigungssensoren 58, 59 gemessen werden. Die Temperatur des ersten Neigungssensors 58 wird als erste Temperatur **T₁** und die Temperatur des zweiten Neigungssensors 59 als zweite Temperatur **T₂** bezeichnet. Die Temperaturmessung erfolgt mittels der Neigungssensoren 58, 59. Die Temperaturmessung mittels der Neigungssensoren 58, 59 hat den Vorteil, dass die Temperatur T₁, T₂ genau an dem Ort im Gerätegehäuse 31 des Rotationslasers 11 gemessen wird, der für die Ausrichtung der ersten und zweiten Horizontalachse 51, 52 relevant ist.

FIG. 7A zeigt die Komponenten des Neigungssensors 115, der im Aufbau den Neigungssensoren 58, 59 des Rotationslasers 11 entspricht. Der Neigungssensor 115 umfasst ein Gehäuse **117,** das mit der Gasblase 116 und einer Flüssigkeit **118** gefüllt ist, eine Lichtquelle **119,** einen Fotodetektor **120** und einen Abstandhalter **121.** Die Gasblase 116 weist eine Blasenlänge L auf, die temperaturabhängig ist und sich daher als Messgröße für die Temperatur T eignet. Die Blasenlänge L der Gasblase 116 kann mit Hilfe der Lichtquelle 119 und des Fotodetektors 120 gemessen werden. Zur Unterscheidung des ersten und zweiten Neigungssensors 58, 59 werden die Komponenten mit einem Index versehen, der mit einem Bindestrich vom Bezugszeichen abgetrennt ist. Der erste Neigungssensor 58 weist den Index "1" und der zweite Neigungssensor 59 den Index "2" auf.

FIG. 7B zeigt eine Kennlinie, die die Nulllage u des Neigungssensors 115 abhängig von der Temperatur T darstellt. Die Kennlinie stellt für den zugelassenen Temperaturbereich des Rotationslasers 11 von - 20 °C bis + 50 °C einen Zusammenhang zwischen der Temperatur des Neigungssensors 115 und der Nulllage u des Neigungssensors 115, die der Ausrichtung in den definierten Zustand des Neigungssensors 115 entspricht, her. In der Kontrolleinrichtung 89 des Rotationslasers 11 sind eine erste Kennlinie, die die erste Nulllage υ₁ des ersten Neigungssensors 58 abhängig von der ersten Temperatur T₁ darstellt, und eine zweite Kennlinie, die die zweite Nulllage υ₂ des zweiten Neigungssensors 59 abhängig von der zweiten Temperatur T₂ darstellt, gespeichert.

FIG. 7C zeigt eine weitere Kennlinie, die die Temperatur T abhängig von der Blasenlänge L der Gasblase 116 darstellt. Die Kennlinie stellt für den zugelassenen Temperaturbereich des Rotationslasers 11 von - 20 °C bis + 50 °C einen Zusammenhang zwischen der Temperatur T des Neigungssensors 115 und der Blasenlänge L der Gasblase 116 her. Die Blasenlänge L der Gasblase 116 verändert sich linear mit der Temperatur T des Neigungssensors 115, wobei die Blasenlänge L mit sinkender Temperatur T abnimmt. In der Kontrolleinrichtung 89 des Rotationslasers 11 sind eine weitere erste Kennlinie, die die erste Temperatur T₁ abhängig von der ersten Blasenlänge L₁ der ersten Gasblase 116-1 darstellt, und eine weitere zweite Kennlinie, die die zweite Temperatur T₂ abhängig von der zweiten Blasenlänge L₂ der zweiten Gasblase 116₂ darstellt, gespeichert.

Alternativ kann die Kennlinie, die die Nulllage u des Neigungssensors 115 in Abhängigkeit von der Temperatur T darstellt, durch eine Kennlinie ersetzt werden, die die Nulllage u des Neigungssensors 115 in Abhängigkeit von der Blasenlänge L der Gasblase 116 darstellt. In diesem Fall sind in der Kontrolleinrichtung 89 des Rotationslasers 11 eine erste Kennlinie, die die erste Nulllage υ₁ des ersten Neigungssensors 58 in Abhängigkeit von der ersten Blasenlänge L₁ der ersten Gasblase 116-1 darstellt, und eine zweite Kennlinie, die die zweite Nulllage υ₂ des zweiten Neigungssensors 59 in Abhängigkeit von der zweiten Blasenlänge L₂ der zweiten Gasblase 116-2 darstellt, gespeichert.

## Patentansprüche

1. Verfahren zum Überprüfen eines Rotationslasers (11) auf Konusfehler, wobei der Rotationslaser (11) einen, in einer Horizontalebene um eine Rotationsachse (21) rotierbaren Laserstrahl (22) aussendet und die Horizontalebene von einer ersten und zweiten Horizontalachse (51, 52) aufgespannt wird, mit den Schritten:
▪ der Rotationslaser (11) wird in einer ersten Ortsposition zwischen einer ersten Messfläche (91) und einer zweiten Messfläche (92) aufgestellt, wobei der Rotationslaser (11) in der ersten Ortsposition eine erste Messentfernung (D₁) zur zweiten Messfläche (92) aufweist und in einer Messrichtung (96) auf die zweite Messfläche (92) ausgerichtet ist,
▪ die Horizontalachsen (51, 52) des Rotationslasers (11) werden in einen horizontalen Zustand ausgerichtet, wobei der horizontale Zustand der Horizontalachsen (51, 52) durch eine erste Nulllage (υ₁) für die erste Horizontalachse (51) und eine zweite Nulllage (υ₂) für die zweite Horizontalachse (52) festgelegt ist,
▪ die Auftreffposition des Laserstrahls (22) auf der ersten Messfläche (91) wird als erster Kontrollpunkt (97) bestimmt,
▪ die Auftreffposition des Laserstrahls (22) auf der zweiten Messfläche (92) wird von einem Detektionsfeld (18) eines Laserempfängers (12) als zweiter Kontrollpunkt (98) bestimmt und der Abstand des zweiten Kontrollpunktes (98) zu einer Nullposition (19) des Detektionsfeldes (18) als erster Höhenversatz (H₁) gespeichert,
▪ der Rotationslaser (11) wird in einer zweiten Ortsposition zwischen der ersten Messfläche (91) und zweiten Messfläche (92) aufgestellt, wobei der Rotationslaser (11) in der zweiten Ortsposition eine zweite Messentfernung (D₂) zur zweiten Messfläche aufweist und in der Messrichtung (96) auf die zweite Messfläche (92) ausgerichtet ist,
▪ der Rotationslaser (11) wird in einer Höhe angeordnet, in der die Auftreffposition des Laserstrahls (22) auf der ersten Messfläche (91) mit dem ersten Kontrollpunkt (97) übereinstimmt,
▪ die Auftreffposition des Laserstrahls (22) auf der zweiten Messfläche (92) wird vom Detektionsfeld (18) des Laserempfängers (12) als dritter Kontrollpunkt (99) bestimmt und der Abstand des dritten Kontrollpunktes (99) zur Nullposition (19) des Detektionsfeldes (18) als zweiter Höhenversatz (H₂) gespeichert,
▪ der Abstand zwischen dem zweiten Kontrollpunkt (97) und dritten Kontrollpunkt (98) wird als Differenz (Δ) aus dem ersten und zweiten Höhenversatz (H₁, H₂) berechnet,
▪ ein Konusfehler (δ) wird aus der ersten Messentfernung (D₁), der zweiten Messentfernung (D₂) und der Differenz (Δ)berechnet und
▪ der Konusfehler (δ) wird mit einem Maximalfehler (δₘₐₓ) verglichen.

2. Verfahren nach Anspruch 1, **dadurch gekennzeichnet, dass** die Auftreffposition des Laserstrahls (22) auf der ersten Messfläche (91) in der ersten Ortsposition von einem weiteren Laserempfänger (94) bestimmt wird.

3. Verfahren nach Anspruch 2, **dadurch gekennzeichnet, dass** die Höheneinstellung des Rotationslasers (11) in der zweiten Ortsposition geregelt erfolgt.

4. Verfahren nach Anspruch 1, **dadurch gekennzeichnet, dass** die erste Messentfernung (D₁) in der ersten Ortsposition und/oder die zweite Messentfernung (D₂) in der zweiten Ortsposition mittels des Rotationslasers (11) und des Laserempfängers (12) bestimmt werden.

5. Verfahren nach Anspruch 4, **dadurch gekennzeichnet, dass** die erste und/oder zweite Messentfernung (D₁, D₂) als erste Distanz (d₁) mittels eines ersten Messverfahrens, als zweite Distanz (d₂) mittels eines zweiten Messverfahrens oder als gemittelte Distanz (d) aus der ersten und zweiten Distanz (d₁, d₂) bestimmt wird.

6. Verfahren nach Anspruch 5, **dadurch gekennzeichnet, dass** der Rotationslaser (11) horizontal ausgerichtet wird, der horizontal ausgerichtete Laserstrahl (102) auf die Nullposition (19) des Detektionsfeldes (18) eingestellt wird, der Laserstrahl in Richtung des Laserempfängers (12) um einen Neigungswinkel (α) geneigt wird, die Auftreffposition des geneigten Laserstrahls (103) auf dem Detektionsfeld (18) des Laserempfängers (12) als erster Messpunkt (104) bestimmt wird, der Abstand des ersten Messpunktes (104) zur Nullposition (19) des Detektionsfeldes (18) als erste Höhe (h₁ = h(α)) gespeichert wird und die erste Distanz (d₁) aus dem Neigungswinkel (α) und einer Höhendifferenz (Δh) zwischen der ersten Höhe (h₁ = h(α)) und der Nullposition (19) des Detektionsfeldes (18) berechnet wird.

7. Verfahren nach Anspruch 5, **dadurch gekennzeichnet, dass** der Rotationslaser (11) horizontal ausgerichtet wird, die Auftreffposition des horizontal ausgerichteten Laserstrahls (102) auf dem Detektionsfeld (18) des Laserempfängers (12) als Referenzpunkt (105) bestimmt wird, der Abstand des Referenzpunktes (105) zur Nullposition (19) des Detektionsfeldes (18) als Referenzhöhe (h₀) gespeichert wird, der Laserstrahl um einen Neigungswinkel (α) geneigt wird, die Auftreffposition des geneigten Laserstrahls (103) auf dem Detektionsfeld (18) als erster Messpunkt (107) bestimmt wird, der Abstand des ersten Messpunktes (107) zur Nullposition (19) des Detektionsfeldes (18) als erste Höhe (h₁ = h(α)) gespeichert wird und die erste Distanz (d₁) aus dem Neigungswinkel (α) und einer Höhendifferenz (Δh = h₁ - h₀) zwischen der ersten Höhe (h₁) und der Referenzhöhe (h₀) berechnet wird.

8. Verfahren nach Anspruch 5, **dadurch gekennzeichnet, dass** der Rotationslaser (11) horizontal ausgerichtet wird, der horizontal ausgerichtete Laserstrahl (102) in einer Neigungsrichtung um einen Neigungswinkel (α) geneigt wird, die Auftreffposition des geneigten Laserstrahls (103) auf dem Detektionsfeld (18) des Laserempfängers (12) als erster Messpunkt (107) bestimmt wird, der Abstand des ersten Messpunktes (107) zur Nullposition (19) des Detektionsfeldes (18) als erste Höhe (h₁ = h(α)) gespeichert wird, der Laserstrahl in einer entgegen gerichteten Neigungsrichtung um einen negativen Neigungswinkel (-α) geneigt wird, die Auftreffposition des geneigten Laserstrahls (108) auf dem Detektionsfeld (18) als zweiter Messpunkt (109) bestimmt wird, der Abstand des zweiten Messpunktes (109) zur Nullposition (19) des Detektionsfeldes (18) als zweite Höhe (h₂ = h(-α)) gespeichert wird und die erste Distanz (d₁) aus dem Neigungswinkel (α) und einer Höhendifferenz (Δh = h₁ - h₂) zwischen der ersten Höhe (h₁) und der zweiten Höhe (h₂) berechnet wird.

9. Verfahren nach Anspruch 5, **dadurch gekennzeichnet, dass** der Rotationslaser (11) horizontal ausgerichtet wird, der horizontal ausgerichtete Laserstrahl (102) mit einer Rotationsgeschwindigkeit (v_{R}) um die Rotationsachse (21) rotiert wird, die Signallänge des rotierenden Laserstrahls (22) auf dem Detektionsfeld (18) des Laserempfängers (12) bestimmt wird und die zweite Distanz (d₂) aus der Rotationsgeschwindigkeit (v_{R}) des rotierenden Laserstrahls (22), der Signallänge (tₛ) des rotierenden Laserstrahls (22) und einer Detektionsbreite (B_{D}) des Detektionsfeldes (18) berechnet wird.

10. Verfahren nach einem der Ansprüche 1 bis 9, **dadurch gekennzeichnet, dass** eine Neigung des Laserempfängers (12) relativ zu einer Lotrichtung (24) als erster Vertikalwinkel (φ₁) in einer ersten Vertikalebene und/oder als zweiter Vertikalwinkel (φ₂) in einer zweiten Vertikalebene ermittelt wird, wobei die erste Vertikalebene von der Lotrichtung (24) und einem Normalenvektor (110) des Detektionsfeldes (18) des Laserempfängers (12) und die zweite Vertikalebene von einer Längsrichtung (25) und einer Querrichtung (26) des Detektionsfeldes (18) aufgespannt wird.

11. Verfahren nach Anspruch 10, **dadurch gekennzeichnet, dass** für den ersten Vertikalwinkel (φ₁) und/oder den zweiten Vertikalwinkel (φ₂) bei der Auswertung mit dem Laserempfänger (12) ein winkelabhängiger Korrekturfaktor (cos(φ₁), cos(φ₂), 1/cos(φ₂)) multipliziert wird.

12. Verfahren nach Anspruch 1, **dadurch gekennzeichnet, dass** für die Ausrichtung der ersten und zweiten Horizontalachse (51, 52) in den horizontalen Zustand mehrere erste und zweite Nulllagen (υ₁, υ₂) in Abhängigkeit von einer Temperatur (T) oder einer von der Temperatur (T) abhängigen Messgröße (L) aufgenommen und in einer ersten und zweiten Kennlinie gespeichert werden.

13. Verfahren nach Anspruch 12, **dadurch gekennzeichnet, dass** die Temperatur (T) oder die von der Temperatur (T) abhängige Messgröße (L) des Rotationslasers (11) gemessen wird, die zur Temperatur (T) oder Messgröße (L) zugehörige Nulllage (υ₁, υ₂) aus der Kennlinie ermittelt wird und die Horizontalachsen (51, 52) in den durch die Nulllagen (υ₁, υ₂) definierten horizontalen Zustand ausgerichtet werden.
